# EUROPÄISCHE PATENTSCHRIFT

(11) **EP 1 675 907 B1**
(45) Veröffentlichungstag und Bekanntmachung des Hinweises auf die Patenterteilung: **16.02.2011**
(21) Anmeldenummer: 04764668.2
(22) Anmeldetag: 01.09.2004
(51) Int. Cl.: C08L 33/00, C08L 33/12, C08J 5/22, C08F 220/14

(54) **POLYMERMISCHUNG FÜR MATTIERTE SPRITZGUSSTEILE**
POLYMER BLEND FOR MATTE INJECTION MOULDED PARTS
MELANGE POLYMERE POUR PIECES MOULEES PAR INJECTION DEPOLIES

(30) Priorität: 17.10.2003 DE 10349144
(43) Veröffentlichungstag der Anmeldung: 05.07.2006
(73) Patentinhaber: Evonik Röhm GmbH, 64293 Darmstadt (DE)
(72) Erfinder: SCHULTES, Klaus, 65197 Wiesbaden (DE); WICKER, Michael, 64342 Seeheim-Jugenheim (DE); KEMPF, Peter, 63517 Rodenbach (DE); HÖSS, Werner, Shanghai 200030 (CN); ALBRECHT, Klaus, 55129 Mainz (DE); GOLCHERT, Ursula, 64807 Dieburg (DE); NAU, Stefan, 64572 Büttelborn (DE)
(86) Internationale Anmeldenummer: PCT/EP2004/009703
(87) Internationale Veröffentlichungsnummer: WO 2005/047391

(56) Entgegenhaltungen:
- EP-A- 0 528 196
- DE-A- 19 927 769
- US-A- 3 843 753
- US-A1- 2004 039 083

## Beschreibung

Die Erfindung betrifft eine Polymermischung für mattierte Spritzgußteile sowie die entsprechenden Spritzgussteile und deren Verwendung.

### Stand der Technik

Ausgehend von der Forderung nach zunehmend geringerem Kraftstoffverbrauch ist die Automobilindustrie bestrebt, das Eigengewicht von Kraftfahrzeugen immer weiter zu verringern. Während in der Vergangenheit weitestgehend Stahlteile im Kfz-Außenbereich verbaut wurden, besteht aus ökonomischen Gründen der Wunsch, diese Elemente aus Werkstoffen mit geringerer Dichte bei gleichzeitig verringertem Fertigungsaufwand herstellen zu können.

Das Eigenschaftsprofil dieser Formteile ist bestimmt durch ein geringes Eigengewicht bei gleichzeitig hoher Witterungsbeständigkeit, hoher Steifigkeit, guter Schlagzähigkeit, guter Maßhaltigkeit insbesondere auch bei Erwärmung im Dauergebrauchstemperaturbereich, guter Chemikalienresistenz z. B. gegen Reinigungsmittel, guter Kratzfestigkeit. Dabei sind nicht nur glänzende Teile, sondern auch solche mit mattierten Oberflächen gewünscht.

EP 0 528 196 A1 beschreibt eine mattierte Polymethacrylat-Folie. Diese besteht aus einer zusammenhängenden Hartphase mit einer Glastemperatur über 70 °C. Die Hartphase ist aufgebaut aus einer Polymethacrylat-Matrix mit einer darin verteilten einphasigen bzw. zweiphasigen Zähphase aus einem Kautschuk, die zu mindestens 15 % mit der Hartphase kovalent verknüpft ist. Zur Mattierung der Folie sind 0,1 bis 70 Gew.-% eines Mattierungsmittels auf der Basis in Form von vernetztem Polymethacrylat-Partikeln enthalten. Die Teilchengrößen des Mattierungsmittels liegen im Bereich von 1 bis 150, bevorzugt 1 bis 10 µm. Der Unterschied zwischen dem Brechungsindex des thermoplastischen Matrixpolymerisats und dem Mattierungsmittel soll maximal 0,02 betragen, um Eintrübungen des Folienmaterials zu vermeiden. Bei der Extrusion entsprechender Polymermischungen und Glättung in einem Walzenglättwerk mit hochglänzenden Walzenoberflächen erhält man trotzdem Folien mit matter Oberfläche. Die Rauigkeitswerte R_{z} nach DIN 4768 liegen dabei im Bereich von 0,01 bis 50 µm und beispielsgemäß bei 1,7 µm. Dabei werden Hartphasenpolymerisate mit Glasübergangstemperaturen von z. B. 90° C eingesetzt, die Zähphasenanteile mit Glasübergangstemperaturen von - 35° C enthalten können.

JP-OS (Laid Open Patent Application) H1-287161, Patent Appl. 63-34877 Appl.Nr. 63-275381, Kyowa Gasu Kagaku Kogyo K.K.) beschreibt AcrylKunststoff Zusammmensetzung für die thermoplastische Verarbeitung zum Erhalt von Kunststoffteilen mit mattierten Oberflächen. Als Alternative zu Verfahren, bei denen mattierte Kunststoffteile aus Polymethylmethacrylat mittels mechanischer Einflüsse erzeugt werden, z. B. durch Einprägen der von Mattstrukturen in glatte Folienbahnen mittels aufgerauter Prägewalzen in einem Walzenglättwerk, sollten Formmassen bereitgestellt werden, bei deren Verwendung sich der Matteffekt ohne solche mechanischen Einflüsse von selbst einstellt. Dies wird erreicht, indem man eine Polymethylmethacrylat-Matrix mit vernetzten Kunststoffpartikeln auf Polymethacrylat-Basis mit einer mittleren Teilchengröße im Bereich von 1 bis 50 µm in Konzentrationen von 0,5 bis 15 Gew.-% versetzt und daraus ein entsprechende thermoplastisch verarbeitbare Formmasse herstellt. Die Polymethylmethacrylat-Matrix kann z. B. aus 95 Gew.-% Methylmethacrylat und 5 Gew.-% Methylacrylat bestehen. Verwendet man entsprechende Formmassen im Spritzguß, so erhält selbst bei Spritzgußwerkzeugen mit inneren Formhohlräumen (Kavitäten) mit spielglatten Oberflächen Spritzgussformteile mit mattierten Oberflächen. Die Rauigkeitswerte R_{z} nach DIN 4768 liegen dabei beispielsgemäß im Bereich von ca. 1 bis 5 µm, je nach Anteil des Mattierungsmittels.

### Aufgabe und Lösung

Der oben zitierte Stand der Technik EP 0 528 196 A1 und JP-OS H1-287161 offenbart Polymermischungen auf Basis von Poly(meth)acrylaten bereit, in denen mattierte Formteile, Folien bzw. Spritzgussteile, mittels üblicher thermoplastischer Verarbeitung ohne mechanische Maßnahmen zur Erzeugung von Mattstrukturen erhalten werden können. Es hat sich jedoch gezeigt, daß die Lehren der EP 0 528 196 A1 und JP-OS H1-287161 für Formteile, insbesondere spritzgegossene Formteile, die matte Oberflächen aufweisen sollen und an die gleichzeitig besonders hohe Materialanforderungen bezüglich der Wärmeformbeständigkeit und gegebenenfalls weiterer kritischer mechanischer Eigenschaften gestellt werden nur noch bedingt oder nicht mehr übertragbar sind. Verwendet man an sich bekannte hochwärmeformbeständige Matrixmaterialen auf Polymethacrylat-Basis mit Vicaterweichungstemperaturen von 104 °C oder darüber, lässt sich der angestrebte Matteffekt kaum noch oder überhaupt nicht mehr erreichen. Viele der heute bestehenden Anforderungsprofile z. B. für matte Außenteile von Kraftfahrzeugen können daher mittels des Standes der Technik noch nicht erfüllt werden.

Ausgehend von z. B. EP 0 528 196 A1 und JP-OS H1-287161 bestand somit die Aufgabe in der Bereitstellung von thermoplastisch verarbeitbaren Polymermischungen, mittels deren Verwendung z. B. im Spritzguß Teile erhalten werden können, die mattierte Oberflächen aufweisen und gleichzeitig eine hohe Widerstandsfähigkeit gegenüber mechanischen und/oder chemischphysikalischen Einflüssen aufweisen. Insbesondere sollen die Teile geeignet sein, um im Automobilbereich bei Außenteilen Anwendung finden zu können.

Die Aufgabe wird gelöst durch eine Polymermischung, enthaltend
a) eine Polymermatrix, die aus einem (Meth)acrylat(co)polymeren oder einer Mischung von (Meth)acrylat(co)polymeren mit einer Vicaterweichungstemperatur VET (ISO 306-B50) von mindestens 104 °C und/oder einem (Meth)acrylimid(co)polymeren besteht,
b) ein Schlagzähmodifizierungsmittel auf Basis von vernetzten Poly(meth)acrylaten, welches nicht kovalent an die Polymermatrix a) gebunden ist,
c) 1 bis 15 Gew.-% Kunststoffpartikel aus vernetzten Polymerisaten auf Basis des Polymethylmethacrylats, des Polystyrols und/oder Polysilikonen, mit einer mittleren Teichengröße im Bereich von 1 bis 30 µm,
   wobei a), b) und c) sich zu 100 Gew.-% addieren, wobei die Polymermischung noch übliche Zusatz, Hilfs- und/oder Füllstoffe enthalten kann und ein aus der Polymermischung spritzgegossener Probekörper gleichzeitig folgende Eigenschaften aufweist:
   einen Rauigkeitswert R_{z} nach DIN 4768 von mindestens 0,7 µm,
   einen Glanzgrad (R 60°) nach DIN 67530 von höchstens 40, sowie eine Vicaterweichungstemperatur VET (ISO 306-B50) von mindestens 90 °C

Die Erfindung geht von der Erkenntnis aus, daß sich bei der Kombination einer hochwärmeformbeständigen Matrix auf Poly(meth)acrylat-Basis mit einem für diese Kunststofftypen ansonsten geeigneten Mattierungsmittel nach thermoplastischer Verarbeitung nicht der eigentlich erwartete und gewünschte Mattierungseffekt einstellt.

Dies könnte z. B. daran liegen, daß sich die partikelartigen Mattierungsmittel in Oberflächennähe im Zuge der thermoplastischen Verarbeitung unter den dort wirkenden Kräften mechanisch verformen und insbesondere in die Matrix hineingedrückt werden. Anders als bei weniger wärmeformbeständigen Matrixmaterialien auf Poly(meth)acrylat-Basis, friert eine hochwärmeformbeständige Matrix auf Poly(meth)acrylat-Basis in der Form bzw. bei Verlassen des formgebenden Werkzeuges schneller ein, d.h. insbesondere im Falle von Spritzgussverarbeitung geht die Schmelze innerhalb von Sekundenbruchteilen vom schmelzeförmigen Zustand in einen gelartigen, festeren Zustand über. In diesem Aggregatzustand wird eine ansonsten stattfindende Rückstellung der oberflächennahen, mechanisch verformten, in die Matrix hineingedrückten Mattierungsmittel in ihren ursprünglich kugelförmigen Zustand weitgehend verhindert. Die Oberfläche bleibt in Folge weitgehend glatt. Der Einsatz eines Mattierungsmittels allein, wie z. B. in der JP-OS H1-287161, ist nicht ausreichend, um einen Matteffekt zu erzeugen.

Um eine mechanische Rückstellung der Mattierungspartikel nach thermoplastischer Verarbeitung beim Verlassen des formgebenden Werkzeuges trotz der schnell einfrierenden hochwärmeformbeständige Matrix zu ermöglichen, enthält die Polymermischung ein Schlagzähmodifizierungsmittel auf Basis von vernetzten Poly(meth)acrylaten.

Anders als in der EP 0 528 196 A1 wird jedoch ein Schlagzähmodifizierungsmittel gewählt, welches nicht kovalent an die Matrix gebunden ist. Die Bewegungsfreiheit der Teilchen in der Matrix ist dadurch im Schmelzezustand vergleichsweise begünstigt. Es wird vermutet, daß beim Verlassen des formgebenden Werkzeuges eine innere Gegenkraft entsteht, die trotz der schnell einfrierenden hochwärmeformbeständige Matrix noch ausreichend ist, um die Rückstellung oberflächennaher deformierter Mattierungsteilchen zu unterstützen. Die Mattierungsteilchen nehmen zumindest teilweise wieder ihre ursprüngliche kugelförmige Gestalt an, wobei sie sich teilweise aus der Matrix erheben und sich in Folge ein Mattierungseffekt einstellt.

### Ausführung der Erfindung

### Die Polymermischung

Die Erfindung betrifft eine Polymermischung, enthaltend
a) eine Polymermatrix, die aus einem (Meth)acrylat(co)polymeren oder einer Mischung von (Meth)acrylat(co)polymeren mit einer Vicaterweichungstemperatur VET (ISO 306-B50) von mindestens 104 °C und/oder einem (Meth)acrylimid(co)polymeren besteht,
b) ein Schlagzähmodifizierungsmittel auf Basis von vernetzten Poly(meth)acrylaten, welches nicht kovalent an die Polymermatrix a) gebunden ist,
c) 1 bis 15 Gew.-% Kunststoffpartikel aus vernetzten Polymerisaten auf Basis des Polymethylmethacrylats, des Polystyrols und/oder Polysilikonen, mit einer mittleren Teichengröße im Bereich von 1 bis 30 µm,
wobei a), b) und c) sich zu 100 Gew.-% addieren, wobei die Polymermischung noch übliche Zusatz, Hilfs- und/oder Füllstoffe enthalten kann und ein aus der Polymermischung spritzgegossener Probekörper gleichzeitig folgende Eigenschaften aufweist:
einen Rauigkeitswert R_{z} nach DIN 4768 von mindestens 0,7 µm,
einen Glanzgrad (R 60°) nach DIN 67530 von höchstens 40, sowie eine Vicaterweichungstemperatur VET (ISO 306-B50) von mindestens 90 °C

Die Komponenten können in folgenden Mengenverhältnissen vorliegen:
a) 25 bis 75 Gew.-%
b) 5 bis 60 Gew.-%
c) 1 bis 15 Gew.-%

Spritzgegossene Probekörper können z. B. die Dimension 110 x 110 x 3 mm haben und unter Verwendung einer spiegelglatten Kavität hergestellt werden. Geeignete Gerätschaften und Herstellungsbedingungen sind z. B.: Spritzgussmaschine DEMAG D150, Fa. Demag; Schmelzetemperatur 250 °C, Werkzeugtemperatur 70 °C, Spritzdruck: 120-160 bar, Nachdruck: 75 - 80 bar.

### Die Polymermatrix a)

Die Polymermatrix a) besteht aus einem (Meth)acrylat(co)polymeren oder einer Mischung von (Meth)acrylat(co)polymeren mit einer Vicaterweichungstemperatur VET (ISO 306-B50) von mindestens 104°C und/oder einem (Meth)acrylimid(co)polymeren.

### (Meth)acrylat(co)polymere auf Methylmethacrylat-Basis

Das (Meth)acrylat(co)polymer der Matrix kann ein Homopolymer oder Copolymer aus mindestens 80 Gew.-% Methylmethacrylat und gegebenenfalls bis zu 20 Gew.-% weiteren mit Methylmethacrylat copolymerisierbaren Monomeren sein. Das (Meth)acrylat(co)polymer kann zu 80 bis 100, vorzugsweise zu 90 - 99,5 Gew.-%, aus radikalisch polymerisierten Methylmethacrylat-Einheiten und gegebenenfalls zu 0 - 20, bevorzugt zu 0,5-10 Gew.-% aus weiteren radikalisch polymerisierbaren Comonomeren, z. B. C1- bis C4-Alkyl(meth)acrylaten, insbesondere Methylacrylat, Ethylacrylat oder Butylacrylat bestehen. Vorzugsweise liegt das mittlere Molekulargewicht M_{w} der Matrix im Bereich von 90.000 g/mol bis 200.000 g/mol, insbesondere 95.000 g/mol bis 180.000 g/mol.

Bevorzugt besteht die Polymermatrix aus einem (Meth)acrylat(co)polymeren aus 96 bis 100, bevorzugt 97 bis 100, besonders bevorzugt 98 bis 100 Gew.-% Methylmethacrylat und 0 bis 4, bevorzugt 0 bis 3, insbesondere 0 bis 2 Gew.-% Methylacrylat, Ethylacrylat und/oder Butylacrylat.

Die (Meth)acrylat(co)polymeren weisen eine Lösungsviskosität in Chloroform bei 25 °C (ISO 1628 - Teil 6) von 45 bis 80, bevorzugt 50 bis 75 ml/g auf. Dies kann einem Molekulargewicht M_{w} (Gewichtsmittel) im Bereich von 80.000 bis 200.000 (g/mol), bevorzugt von 100.000 bis 170.000 entsprechen. Die Bestimmung des Molekulargewichts M_{w} kann beispielsweise per Gelpermeationschromatographie oder per Streulichtmethode erfolgen (siehe z. B. H. F. Mark et al., Encyclopedia of Polymer Science and Engineering, 2nd. Edition, Vol. 10, Seiten 1 ff., J. Wiley, 1989).

Die Vicaterweichungstemperatur VET (ISO 306-B50) kann mindestens 104, bevorzugt 104 bis 114, insbesondere 105 bis 110 °C betragen. Der Schmelzindex MVR (ISO 1133, 230 °C / 3,8 kg) kann z. B. im Bereich von 0,5 bis 6,0, bevorzugt von 1,5 bis 3,5 cm³/10 min liegen.

### Maleinsäureanhydrid enthaltende (Meth)acrylat(co)polymere

Das (Meth)acrylat(co)polymer der Matrix kann ein Copolymer aus Methylmethacrylat, Styrol und Maleinsäureanhydrid sein

Die Lösungsviskosität in Chloroform bei 25 °C (ISO 1628 - Teil 6) kann größer/gleich 65, bevorzugt 68 bis 75 ml/g liegen. Dies kann einem Molekulargewicht M_{w} (Gewichtsmittel) von 130000 g/mol (Bestimmung von M_{w} mittels Gelpermeationschromatographie unter Bezug auf Polymethylmethacrylat als Eichstandard) entsprechen. Die Bestimmung des Molekulargewichts Mw kann beispielsweise per Gelpermeationschromatographie oder per Streulichtmethode erfolgen (siehe z. B. H. F. Mark et al., Encyclopedia of Polymer Science and Engineering, 2nd. Edition, Vol. 10, Seiten 1 ff., J. Wiley, 1989).

Die Vicaterweichungstemperatur VET (ISO 306-B50) kann mindestens 112, bevorzugt 114 bis 124, insbesondere 118 bis 122 °C betragen. Der Schmelzindex MVR (ISO 1133, 230 °C /3,8 kg) kann z. B. im Bereich von 0,8 bis 2,0, bevorzugt von 1,0 bis 1,5 cm³/10 min liegen.

Geeignete Mengenanteile können z. B. sein:
50 bis 90, bevorzugt 70 bis 80 Gew.-% Methylmethacrylat,
10 bis 20, bevorzugt 12 bis 18 Gew.-% Styrol und
5 bis 15, bevorzugt 8 bis 12 Gew.-% Maleinsäureanhydrid

Entsprechende Copolymere können in sich bekannter Weise durch radikalische Polymerisation erhalten werden. EP-A 264 590 beschreibt z. B. ein Verfahren zur Herstellung einer Formmasse aus einem Monomerengemisch aus Methylmethacrylat, Vinylaromat, Maleinsäureanhydrid sowie gegebenenfalls aus einem niederen Alkylacrylat, bei dem die Polymerisation bis zu einem Umsatz von 50 % in An- oder Abwesenheit eines nicht polymerisierbaren organischen Lösungsmittels durchgeführt wird und bei dem die Polymerisation ab einem Umsatz von mindestens 50 % im Temperaturbereich von 75 bis 150 °C in Gegenwart eines organischen Lösungsmittels bis zu einem Umsatz von mindestens 80 % fortgesetzt wird und anschließend die niedermolekularen flüchtigen Bestandteile verdampft werden.

In JP-A 60-147 417 wird ein Verfahren zur Herstellung einer hochwärmeformbeständigen Polymethacrylat-Formmasse beschrieben, bei dem eine Monomermischung aus Methylmethacrylat, Maleinsäureanhydrid und mindestens einem Vinylaromaten in einen Polymerisationsreaktor, der für Lösungs- oder Massepolymerisation geeignet ist, bei einer Temperatur von 100 bis 180 °C eingespeist und polymerisiert wird. DE-OS 44 40 219 beschreibt ein weiteres Herstellungsverfahren.

Die Komponente a) kann z. B. hergestellt werden, indem eine Monomermischung aus 3000 g Methylmethacrylat, 600 g Styrol und 400 g Maleinsäureanhydrid mit 1,68 g Dilauroylperoxid und 0,4 g tert.-Butylperisononanoat als Polymerisationsinitiator, 6,7 g 2-Mercaptoethanol als Molekulargewichtsregler, sowie 4 g 2-(2-Hydroxy-5-methylphenyl)benztriazol als UV-Absorber und 4 g Palmitinsäure als Entformungshilfsmittel versetzt wird.

Das resultierende Gemisch wird in eine Polymerisationskammer gefüllt und 10 Minuten entgast. Danach wird im Wasserbad 6 Stunden bei 60 °C und 25 Stunden bei 50 °C Wasserbadtemperatur polymerisiert. Nach etwa 25 Stunden erreicht das Polymerisationsgemisch mit 144 °C seine Maximaltemperatur. Nach Entfernung der Polymerisationskammer wird das Polymerisat noch 12 Stunden bei 120 °C im Luftschrank getempert.
Das resultierende Copolymerisat ist klar und weist einen Gelbwert nach DIN 6167 (D65/10°) von 1,4 an einer 8 mm dicken Preßplatte und eine Lichttransmission TD65 nach DIN 5033/5036 von 90,9 % auf. Die Vicat-Erweichungstemperatur VET des Copolymerisats beträgt nach ISO306-B50 121 °C, die reduzierte Viskosität nsp/c 65 ml/g entsprechend einem mittleren Molekulargewicht M_{w} von etwa 130.000 Dalton (bezogen auf einen Polymethylmethacrylat-Standard).

### (Meth)acrylimid(co)polymere

Das (Meth)acrylat(co)polymer der Matrix kann ein (Meth)acrylimid(co)polymer sein. Herstellungsverfahren für die genannten Polymethacrylimide sind z. B. aus EP-A 216 505, EP-A 666 161 oder aus EP-A 776 910 bekannt.

Als Ausgangsstoff für die Imidierung verwendet man ein Polymerisat von Alkyestem der Methacrylsäure, das im allgemeinen zu mehr als 50 Gew.-%, vorzugsweise zu mehr als 80 Gew.-%, besonders bevorzugt zu 95 bis 100 Gew.-% aus Einheiten von Alkyestern der Methacrylsäure mit 1 bis 4 Kohlenstoffatomen im Alkylrest besteht. Bevorzugt ist Methylmethacrylat. Bevorzugte Polymerisate sind zu wenigstens 80 Gew.-%, vorzugsweise zu mehr als 90 Gew.-%, besonders bevorzugt zu mehr als 95 Gew.-% aus Methylmethacrylat aufgebaut. Als Comonomere kommen alle mit Methylmethacrylat copolymerisierbaren Monomeren, insbesondere Alkylester der Acrylsäure mit 1 bis 4 Kohlenstoffatomen im Alkylrest, Acryl- oder Methacrylnitril, Acryl- oder Methacrylamid, Styrol oder auch Maleinsäureanhydrid in Betracht. Bevorzugt sind thermoplastisch verarbeitbare Polymerisate dieser Art mit einer reduzierten Viskosität im Bereich von 20 bis 92, vorzugsweise von 50 bis 80 ml/g (gemessen nach ISO 8257, Teil 2). Sie werden im Form eines Pulvers oder Granulats mit einer mittleren Teilchengröße von ca. 0,03 bis 3 mm eingesetzt.

Wesentlich ist, daß in einem Verfahrensschritt (a) zunächst Ammoniak als Imidierungsmittel verwendet wird, in einem darauffolgenden Verfahrensschritt (b) Methylamin eingesetzt wird und das molare Verhältnis von eingesetztem Ammoniak zum eingesetzten Methylamin 1 : 0,5 bis 1 : 3, vorzugsweise 1 : 0,8 bis 1 : 2,7, besonders bevorzugt 1 : 0,9 bis 1 : 1,1 beträgt. Unterhalb dieses Bereiches können verstärkt Trübungen des erhaltenen Polymethacrylimids auftreten. Bei einem molaren Überschuß von Methylamin bezogen auf den eingesetzten Ammoniak steigt wiederum der Anteil der Carbonsäuregruppen im Polymeren in unerwünschter Weise an.

Das Verfahren kann kontinuierlich oder diskontinuierlich durchgeführt werden. Im letztgenannten Fall wird der Ammoniak zu Beginn der Umsetzung im Verfahrensschritt (a) zugegeben und das Methylamin allmählich oder in einem oder mehreren Teilen nach Umsetzung des Ammoniaks im Verfahrensschritt (b) zugesetzt. Beispielweise kann das Imidierungsmittel mit einer Druckpumpe gleichmäßig oder in periodischen Anteilen in den auf Reaktionstemperatur erhitzten Reaktor eingepreßt werden. Gegebenenfalls wird jeweils vor dem Zusatz eines weiteren Teils des Imidierungsmittels die im Reaktor angesammelte Gasphase entspannt, wodurch die bis dahin gebildeten flüchtigen Reaktionsprodukte aus dem Reaktionsgemisch entfernt werden.

Bei kontinuierlicher Arbeitsweise wird die Imidierung zweckmäßig in einem Rohrreaktor durchgeführt und das Polymerisat und das Imidierungsmittel werden kontinuierlich in den Rohrreaktor eingeleitet. An einer ersten Einlaßöffnung wird der erste Teil des Imidierungsmittels, der Ammoniak, eingeleitet und mit dem schmelzflüssigen Polymerisat vermischt. Weitere Anteile des Imidierungsmittels können an einer oder mehreren Stellen in den Rohrreaktor eingeführt werden, an denen das zuvor eingeleitete Imidierungsmittel teilweise oder ganz umgesetzt ist. Als Rohrreaktor wird vorzugsweise ein Ein- oder ein Mehrschneckenextruder verwendet. Auch hier können Druck- und Entgasungszonen miteinander abwechseln, um aus dem im Extruder allmählich weiterbewegten Reaktionsgemisch jeweils vor dem Zusatz weiteren Imidierungsmittels die bis dahin gebildeten flüchtigen Reaktionsprodukte zu entfernen.

Beispielweise kann 1 Grundmol Polymethylmethacrylat (die Bezeichnung "Grundmol" bezieht sich auf die den polymerisierten Estereinheiten zugrundeliegende Menge des Estermonomeren) im Verfahrensschritt (a) mit 0,1 bis 1 Mol Ammoniak umgesetzt werden. Gute Resultate werden z. B. mit 0,2 bis 0,8 Mol Ammoniak erhalten, besonders bevorzugt sind 0,4 bis 0,6 Mol. Der Ammoniak kann vorzugweise in einer bis fünf Zugabemengen zugesetzt werden. Nach weitgehender Umsetzung des Ammoniaks erfolgt dann im Verfahrensschritt (b) die Zugabe von Methylamin in einem molaren Verhältnis von 0,5 bis 3, vorzugsweise von 0,8 bis 2,7, besonders bevorzugt von 0,9 bis 1,1 bezogen auf die insgesamt eingesetzte Menge des Ammoniaks. Besonders günstig ist es, wenn das molare Verhältnis von eingesetztem Ammoniak zu eingesetztem Methylamin 1 : 0,5 bis 1 : 0,8 beträgt. Die Zugabe des Methylamins kann in analoger Weise, bevorzugt in ein bis fünf Zugabemengen erfolgen. Auch hier empfiehlt es sich bei der Zugabe von Teilmengen jeweils nur bis etwa 75 % der zuvor eingesetzten Menge zu verwenden.

Vorzugsweise wird die Umsetzung mit dem Imidierungsmittel abgebrochen bevor das Polymerisat vollständig imidiert ist. Zu diesem Zweck können die Imidierungsmittel in einer Gesamtmenge von z. B. 0,2 bis 2,5, vorzugsweise von 0,5 - 1,5, besonders bevorzugt von 0,8 - 1,2 Mol pro Grundmol der Estereinheiten eingesetzt werden. Es ist jedoch stets das festgelegte Mengenverhältnis von Ammoniak zu Methylamin einzuhalten. Man erhält dann Polymerisate, die zu etwa 20 bis 80 Grundmol-% aus cyclischen Methacrylimideinheiten aufgebaut sind und nur äußerst geringe Mengen, unter 0,5 Gew.-%, an Methacrylsäure-Einheiten aufweisen.

Das Imidierungsverfahren kann weitgehend in an sich bekannter Weise, z. B. wie in EP 441 148 beschrieben, ausgeführt werden. Die Imidierung läuft am besten bei Temperaturen oberhalb der Schmelztemperatur bzw. mindestens 20 °C oberhalb der Vicat-B-Erweichungstemperatur nach ISO 306 des Ausgangspolymeren ab. Noch besser wird eine Umsetzungstemperatur gewählt, die mindestens 20°C oberhalb der Erweichungstemperatur des entstehenden imidierten Polymerisats liegt. Da die Vicat-Erweichungstemperatur des imidierten Polymeren in der Regel die Zielgröße des Verfahrens ist und der zu erreichende Imidierungsgrad danach festgelegt wird , ist es ebenso leicht möglich, die erforderliche Mindest-Temperatur zu bestimmen. Bevorzugt ist ein Temperaturbereich von 140 bis 300, insbesondere von 150 bis 260 °C, besonders bevorzugt von 180 - 220 °C. Zu hohe Umsetzungstemperaturen führen manchmal zu einer Verminderung der Viskosität infolge teilweisen Kettenabbruchs des Polymeren. Um das Polymerisat nicht mehr als nötig thermisch zu belasten, kann z. B. die Umsetzungstemperatur ausgehend von einer Temperatur dicht über der Schmelztemperatur des Ausgangspolymeren, allmählich bzw. stufenweise gesteigert werden und erst zuletzt die Erweichungstemperatur des imidierten Endprodukts um wenigstens 20 °C überschreiten. Innerhalb der Umsetzungsstufen wird vorzugsweise mit selbst einstellendem Druck, der bei 50 bis 500 bar liegen kann, gearbeitet. Während der Verfahrenstufen kann, z. B. zur Entgasung, entspannt werden. Dabei kann die Temperatur des Reaktionsgemisches sinken und muß danach wieder auf den erforderlichen Wert erhöht werden. Wird Imidierungsmittel unter Umsetzungsbedingungen zugeführt, so muß dafür natürlich ein entsprechend hoher Druck angewendet werden.

Die Umsetzungsdauer richtet sich nach der Reaktionsgeschwindigkeit unter den angewandten Bedingungen. Sie kann deutlich kürzer sein als die Reaktionszeit, die zu einer vollständigen Imidierung benötigt würde, soll aber jedenfalls ausreichen, um eine teilweise, z. B. 20 - 80 %-ige vorzugsweise 30 - 60 %-ige Imidierung des Polymeren zu gewährleisten. Im allgemeinen sind dafür 10 sec bis 30 min, vorzugsweise 1 bis 7 min, pro Verfahrensstufe ausreichend. Als Richtwert können 4-6 min gelten.

Die Umsetzung kann gewünschtenfalls in einer oder in beiden Verfahrensstufen in Anwesenheit von Lösungs- oder Verdünnungsmitteln durchgeführt werden, wie beispielsweise aus US 2 146 209, DE 1 077 872, DE 1 088 231 oder EP 234 726 bekannt. Geeignete Lösungsmittel sind vor allem solche, die bei Raumtemperatur flüssig und bei erhöhter Temperatur, gegebenenfalls bei Unterdruck flüchtig sind und sich von dem imidierten Polymerisat leicht abtrennen lassen. Sie können entweder für das Ausgangspolymerisat oder für das imidierte Polymerisat oder für beide Lösungsmittel sein, gegebenenfalls nur unter Umsetzungsbedingungen, jedoch ist dies nicht grundsätzlich notwendig. Zu den verwendbaren Lösungs- und Verdünnungsmitteln zählen Mineralöle, Benzinkohlenwasserstoffe, Aromaten, Alkanole, Ether, Ketone, Ester, HalogenKohlenwasserstoffe, sowie auch Wasser.

Nach der letzten Umsetzungsstufe wird entspannt und das imidierte Polymerisat abgekühlt. Dabei können das ggf. mitverwendete Lösungs- bzw. Verdünnungsmittel zusammen mit überschüssigem Imidierungsmittel und abgespaltenem Alkanol von dem imidiertem Polymerisat abgetrennt werden. Diese Verfahrensstufe gestaltet sich besonders vorteilhaft, wenn das Verfahren zumindest in der letzten Stufe in einem Rohrreaktor, insbesondere einem Extruder durchgeführt wird. Die vom Polymerisat abzutrennenden Stoffe können in flüssiger Form oder in Dampfform vor dem Ende des Rohrreaktors an einer oder mehreren Stellen abgenommen werden, wo das Polymerisat noch im Schmelzezustand vorliegt. Dabei kann der erste Anteil dieser Stoffe unter dem vollen Reaktionsdruck und die letzten Reste aus einer Entspannungszone im Unterdruck abgenommen werden. Dafür können an sich bekannte ein- oder mehrstufige Entgasungsextruder eingesetzt werden. Gegebenenfalls kann auch das ganze Reaktionsgemisch aus dem Rohrreaktor ausgetragen werden, entspannt, gekühlt und zerkleinert und erst danach von den Nebenbestandteilen getrennt werden. Zu diesem Zweck kann das erkaltete und zerkleinerte Polymerisat mit einem geeigneten Lösungsmittel oder mit Wasser gewaschen werden.

Das so erhaltene imidierte Produkt kann in an sich bekannter Weise, z. B. thermoplastisch, verarbeitet werden. Aufgrund des extrem niedrigen Gehalts an Methacrylsäure-Gruppen im Polymerisat, zeichnet es sich durch eine gute Mischbarkeit und Verträglichkeit mit anderen Polymerisaten aus. Die Witterungsbeständigkeit ist ebenfalls sehr gut, da die Wasseraufnahme bei Feuchtigkeit deutlich reduziert ist. Hierbei scheint der im Vergleich zu den Carboxyl-Gruppen höhere Anteil an Anhydridgruppen eine nur unwesentliche Rolle zu spielen. Dies könnte
z. B. darauf zurückzuführen sein, daß die Anhydridgruppen im Innern des Polymermoleküls relativ gut vor hydrolytischer Einwirkung durch Feuchtigkeit geschützt sind. Das erfindungsgemäße Verfahren gestattet es in zwei einfach

durchzuführenden Verfahrensschritten ein für praktische Anwendung hochwertiges Polymethacrylalkylimid zu erhalten.

Die teilweise oder vollständige Imidierung von Polymerisaten von Alkylestern der Methacrylsäure durch die Umsetzung mit einem Imidierungsmittel, z. B. einem primären Amin, ist z. B aus der US 2.146.209 bekannt. Das Polymerisat wird in An- oder Abwesenheit eines Lösungsmittels mit dem Imidierungsmittel gegebenenfalls unter Druck auf Temperaturen von 140 bis 250 °C erhitzt.

Aus EP 216 505 ist bekannt, daß Polymethacrylimide mit anderen thermoplastischen Polymeren unverträglich sind, wenn sie mehr als etwa 0,3 bis 0,4 Milliäquivalente an Carbonsäure- oder Carbonsäureanhydridgruppen enthalten. Dies entspricht einem Gehalt
an 2,5 bis 3,5 Gew.-% Methacrylsäure- und/oder Methacrylsäureanhydrid-Einheiten. Solche Einheiten entstehen neben Methacrylsäurealkylimid-Einheiten bei der Umsetzung von Polymethylmethacrylat mit primären Aminen. Bei hohen Imidierungsraten, d. h. wenn 95 % oder mehr der imidierbaren Gruppen des Polymerisats zu Imidgruppen umgesetzt sind, liegt der Gehalt an Carbonsäure- oder Anhydridgruppen in der Regel unter der oben genannten Grenze. Häufig werden jedoch geringere Imidierungsgrade unterhalb von 95 % angestrebt, so daß die vermehrte Bildung der Carbonsäure- oder Anhydridgruppen ein Problem darstellt.

EP 456 267 (US 5.135.985) beschreibt Polymethacrylalkylimide mit weniger als 2,5 Gew.-% Methacrylsäure-Einheiten, die durch homogene Mischung von Polymethacrylalkylimiden mit unterschiedlichen Imidierungsgraden hergestellt werden können. Auch diese Herstellungsweise ist sehr aufwendig, da ständig Polymere mit unterschiedlichem Imidierungsgrad als Rohstoffe für die Herstellung eines Polymethacrylalkylimids bereitgestellt werden müssen.

In EP 441 148 (US 5.110.877) wird ein Verfahren zum Imidieren eines Polymerisats von Alkylestern der Methacrylsäure durch Umsetzung mit einem Imidierungsmittel, bei dem ein Teil des Imidierungsmittels erst zugesetzt wird nachdem das zuvor zugesetzte Imidierungsmittel wenigstens teilweise oder ganz umgesetzt ist, beschrieben. Als geeignete Imidierungsmittel werden Ammoniak oder primäre Amine, wie z. B. Methylamin, genannt. Das Verfahren ermöglicht es Polymethacrylalkylimide mit niedrigen Gehalten an Methacrylsäure-Einheiten von 1,3 bzw. 1,7 Gew.-% bei Imidierungsgraden von ca. 80 % herzustellen. Im Vergleich dazu wird der Gehalt an Methacrylsäure-Einheiten beim nicht erfindungsgemäßen Standardverfahren mit 4,9 Gew.-% angegeben.

Gemäß der Lehre von EP 216 505 wird die Mischbarkeit von Polymethacrylalkylimiden mit anderen thermoplastischen Polymeren verbessert, wenn die Methacrylsäure- und/oder Methacrylsäureanhydrid-Einheiten durch eine Nachbehandlung des Polymeren mit einem Alkylierungsmittel, wie Orthoameisensäureestern,
unter Bildung von Methacrylester-Einheiten, umgesetzt werden. Auf diese Weise können beispielsweise Polymethacrylalkylimide mit weniger als 0,1 Milliäquivalenten Säuregruppen pro g (ca. 0,8 Gew.-%) bei Imidierungsgraden von ca. 60 Gew.-% hergestellt werden. Die Nachalkylierung ist daher zwar sehr effektiv, sie erfordert jedoch einen zusätzlichen und teuren Verfahrensschritt.

In der Praxis zeigt sich häufig, daß insbesondere Carbonsäure-Einheiten in Polymethacrylalkylimiden von Nachteil sind. Dagegen halten sich die unerwünschten Auswirkungen vorhandener Carbonsäureanhydridgruppen in tolerierbaren Grenzen. Daher genügt es, in erster Linie ein nahezu von Carbonsäure-Gruppen freies Polymethacrylimid herzustellen.

Ein Verfahren zur Herstellung eines imidierten Polymerisats von Alkylestern der Methacrylsäure mit einem Gehalt an Carbonsäureeinheiten von weniger als 0,5 Gew.-%, bezogen auf das Polymere, durch Imidierung eines Polymerisats von Alkylestern der Methacrylsäure in zwei Verfahrenschritten (a) und (b) Kann dadurch gekennzeichnet sein, daß im ersten Verfahrensschritt
(a) Ammoniak als Imidierungsmittel eingesetzt wird
   und im zweiten Verfahrensschritt
(b) Methylamin als Imidierungsmittel eingesetzt wird
   wobei das molare Verhältnis des eingesetzten Ammoniaks zum eingesetzten Methylamin 1 : 0,5 bis 1 : 3 beträgt.

Das Verfahren ist einfach ausführbar und liefert Polymethacrylalkylimide mit praxisgerechten Imidierungsgraden, die aufgrund des geringen Gehalts an Methacrylsäure-Einheiten sehr gute Praxiseigenschaften aufweisen. Unerwartet war es dabei, daß durch das definierte Verhältnis von Ammoniak und Methylamin in den Verfahrensschritten (a) bzw. (b) Nebenreaktionen, die zum Vorhandensein von Methacrylsäure-Einheiten im Endprodukt führen, offensichtlich ausbleiben. Der vergleichsweise höhere Gehalt an Carbonsäureanhydridgruppen von ca. 5 - 15 Gew.-% wirkt sich erstaunlicherweise nicht so ungünstig aus, wie man aufgrund des Standes der Technik annehmen könnte. Die erhaltenen Polymere weisen hohe Vicat Erweichungstemperaturen auf und sind gut verarbeitbar.

Als Ausgangsstoff für die Imidierung verwendet man ein Polymerisat von Alkyestem der Methacrylsäure, das im allgemeinen zu mehr als 50 Gew.-%, vorzugsweise zu mehr als 80 Gew.-%, besonders bevorzugt zu 95 bis 100 Gew.-% aus Einheiten von Alkyestem der Methacrylsäure mit 1 bis 4 Kohlenstoffatomen im Alkylrest besteht. Bevorzugt ist Methylmethacrylat. Bevorzugte Polymerisate sind zu wenigstens 80 Gew.-%, vorzugsweise zu mehr als 90 Gew.-%, besonders bevorzugt zu mehr als 95 Gew.-% aus Methylmethacrylat aufgebaut. Als Comonomere kommen alle mit Methylmethacrylat copolymerisierbaren Monomeren, insbesondere Alkylester der Acrylsäure mit 1 bis 4 Kohlenstoffatomen im Alkylrest, Acryl- oder Methacrylnitril, Acryl- oder Methacrylamid, Styrol oder auch Maleinsäureanhydrid in Betracht. Bevorzugt sind thermoplastisch verarbeitbare Polymerisate dieser Art mit einer reduzierten Viskosität im Bereich von 20 bis 92, vorzugsweise von 50 bis 80 ml/g (gemessen nach ISO 8257, Teil 2). Sie werden im Form eines Pulvers oder Granulats mit einer mittleren Teilchengröße von ca. 0,03 bis 3 mm eingesetzt.

### Mischung von (Meth)acrylat(co)polymeren

Die Bestandteile a) und b) der erfindungsgemäßen Polymermischung können einzeln oder in Form eines Compounds eingebracht werden, der die folgenden Komponenten d), e), f) und/oder g) enthält. In diesem Fall entsprechen die Komponenten d), f) und/oder g) der Polymermatrix a) der erfindungsgemäßen Polymermischung. Die Komponente e) entspricht dem Schlagzähmodifizierungsmittel b) der erfindungsgemäßen Polymermischung. Die Komponenten d), e), f) und g) sind wie folgt definiert:
d) ein niedermolekulares (Meth)acrylat(co)polymer,
   charakterisiert durch eine Lösungsviskosität in Chloroform bei 25 °C (ISO 1628 - Teil 6) von kleiner/gleich 55 ml/g
e) ein Schlagzähmodifizierungsmittel auf Basis von vernetzten Poly(meth)acrylaten
f) ein höhermolekulares (Meth)acrylat(co)polymer,
   charakterisiert durch eine Lösungsviskosität in Chloroform bei 25 °C (ISO 1628 - Teil 6) von größer/gleich 65 ml/g und/oder
g) ein weiteres von d) verschiedenes (Meth)acrylat(co)polymer,
   charakterisiert durch eine Lösungsviskosität in Chloroform bei 25 °C (ISO 1628 - Teil 6) von 50 bis 55 ml/g
   wobei die Komponenten d), e), f) und/oder g) jeweils für sich genommen als einzelne Polymere als auch als Mischungen von Polymeren verstanden werden können,
   wobei d), e), f) und/oder g) sich zu 100 Gew.-% addieren,
   wobei die Polymermischung d), e), f) und/oder g) noch übliche Zusatz, Hilfs- und/oder Füllstoffe enthalten kann und
   wobei ein aus der Polymermischung hergestellter Probekörper eine oder mehrere der folgenden Eigenschaften aufweist:
   I. ein Zugmodul (ISO 527) von mindestens 2600 MPa,
   II. eine Vicaterweichungstemperatur VET (ISO 306-B50) von mindestens 109 °C,
   III. eine Schlagzähigkeit (ISO 179-2D, flatwise) von mindestens 17 KJ/m², und
   IV. einen Schmelzindex MVR (ISO 1133, 230 °C /3,8 kg) von mindestens 1,5 cm³/10 min.

### Komponente d)

Die Komponente d) ist ein niedermolekulares (Meth)acrylat(co)polymer, charakterisiert durch eine Lösungsviskosität in Chloroform bei 25 °C (ISO 1628 - Teil 6) von kleiner/gleich 55, bevorzugt kleiner/gleich 50, insbesondere 45 bis 55 ml/g.

Dies kann einem Molekulargewicht M_{w} (Gewichtsmittel) von 95000 g/mol (Bestimmung von M_{w} mittels Gelpermeationschromatographie unter Bezug auf Polymethylmethacrylat als Eichstandard) entsprechen. Die Bestimmung des Molekulargewichts M_{w} kann beispielsweise per Gelpermeationschromatographie oder per Streulichtmethode erfolgen (siehe z. B. H. F. Mark et al., Encyclopedia of Polymer Science and Engineering, 2nd. Edition, Vol. 10, Seiten 1 ff., J. Wiley, 1989).

Die Komponente d) ist bevorzugt ein Copolymer aus Methylmethacrylat, Styrol und Maleinsäureanhydrid.

Geeignete Mengenanteile können z. B. sein:
50 bis 90, bevorzugt 70 bis 80 Gew.-% Methylmethacrylat,
10 bis 20, bevorzugt 12 bis 18 Gew.-% Styrol und
5 bis 15, bevorzugt 8 bis 12 Gew.-% Maleinsäureanhydrid

Entsprechende Copolymere können in sich bekannter Weise durch radikalische Polymerisation erhalten werden. EP-A 264 590 beschreibt z. B. ein Verfahren zur Herstellung einer Formmasse aus einem Monomerengemisch aus Methylmethacrylat, Vinylaromat, Maleinsäureanhydrid sowie gegebenenfalls aus einem niederen Alkylacrylat, bei dem die Polymerisation bis zu einem Umsatz von 50 % in An- oder Abwesenheit eines nicht polymerisierbaren organischen Lösungsmittels durchgeführt wird und bei dem die Polymerisation ab einem Umsatz von mindestens 50 % im Temperaturbereich von 75 bis 150 °C in Gegenwart eines organischen Lösungsmittels bis zu einem Umsatz von mindestens 80 % fortgesetzt wird und anschließend die niedermolekularen flüchtigen Bestandteile verdampft werden.

In JP-A 60-147 417 wird ein Verfahren zur Herstellung einer hochwärmeformbeständigen Polymethacrylat-Formmasse beschrieben, bei dem eine Monomermischung aus Methylmethacrylat, Maleinsäureanhydrid und mindestens einem Vinylaromaten in einen Polymerisationsreaktor, der für Lösungs- oder Massepolymerisation geeignet ist, bei einer Temperatur von 100 bis 180 °C eingespeist und polymerisiert wird. DE-OS 44 40 219 beschreibt ein weiteres Herstellungsverfahren.

Die Komponente d) kann z. B. hergestellt werden, indem man eine Monomermischung aus z. B. 6355 g Methylmethacrylat, 1271 g Styrol und 847 g Maleinsäureanhydrid mit 1,9 g tert.-Butylpemeodecanoat und 0,85 g tert.-Butylperoxi-3,5,5-trimethylhexanoat als Polymerisationsinitiator und 19,6 g 2-Mercaptoethanol als Molekulargewichtsregler sowie mit 4,3 g Palmitinsäure versetzt. Das resultierende Gemisch kann in eine Polymerisationskammer gefüllt und z. B. 10 Minuten entgast werden. Danach kann im Wasserbad z. B. 6 Stunden bei 60°C, nachfolgend 30 Stunden bei 55°C Wasserbadtemperatur polymerisiert werden. Nach etwa 30 Stunden erreicht das Polymerisationsgemisch mit etwa 126°C seine Maximaltemperatur. Nach Entfernung der Polymerisationskammer aus dem Wasserbad wird das Polymerisat entsprechend der Komponente a) in der Polymerisationskammer noch etwa 7 Stunden z. B. bei 117°C im Luftschrank getempert.

### Komponente e)

Die Komponente e) ist ein Schlagzähmodifizierungsmittel auf Basis von vernetzten Poly(meth)acrylaten. Bevorzugt weist die Komponente e) einen zwei- oder dreischaligen Aufbau auf.

Schlagzähmodifizierungsmittel für Polymethacrylat-Kunststoffe sind hinlänglich bekannt. Herstellung und Aufbau von schlagzähmodifizierten Polymethacrylat-Formmassen sind z. B. in EP-A 0 113 924, EP-A 0 522 351, EP-A 0 465 049 EP-A 0 683 028 und US 3,793,402 beschrieben. Ein geeignetes kommerziell erhältliches Produkt ist z. B. METALLEN® IR441 der Fa. Mitsubishi Rayon.

### Schlagzähmodifizierungsmittel

In der Polymethacrylat-Matrix sind 1 bis 30, bevorzugt 2 bis 20, besonders bevorzugt 3 bis 15, insbesondere 5 bis 12 Gew.-% eines Schlagzähmodifizierungsmittels enthalten. Diese Schlagzähmodifizierungsmittel enthalten eine Elastomerphase, die aus vernetzten Polymerisatteilchen besteht,. Das Schlagzähmodifizierungsmittel wird in an sich bekannter Weise durch Perlpolymerisation oder durch Emulsionspolymerisation erhalten.

Im einfachsten Fall handelt es sich um, mittels Perlpolymerisation erhältliche, vernetzte Teilchen mit einer mittleren Teilchengröße im Bereich von 50 bis 500 µm, bevorzugt 80 bis120 µm. Diese bestehen in der Regel aus mindestens 40, bevorzugt 50 - 70 Gew.-% Methylmethacrylat, 20 bis 40, bevorzugt 25 bis 35 Gew.-% Butylacrylat sowie 0,1 bis 2, bevorzugt 0,5 bis 1 Gew.-% eines vernetzenden Monomeren, z. B. einem mehrfunktionellen (Meth)acrylat wie z. B. Allylmethacrylat und gegebenenfalls weiteren Monomeren wie z. B. 0 bis 10, bevorzugt 0,5 bis 8 Gew.-% an C1-C4-Alkyl(meth)acrylaten, wie Ethylacrylat oder Butylacrylat, bevorzugt Methylacrylat, oder anderen vinylisch polymerisierbaren Monomeren wie z. B. Styrol.

Bevorzugte Schlagzähmodifizierungsmittel sind Polymerisatteilchen, die einen zwei-, besonders bevorzugt einen dreischichtigen Kern-Schale-Aufbau aufweisen und durch Emulsionspolymerisation erhalten werden können (s. z. B. EP-A 0 113 924, EP-A 0 522 351, EP-A 0 465 049 und EP-A 0 683 028). Typische Teilchengrößen (Durchmesser) dieser Emulsionspolymerisate liegen im Bereich von 100 - 500 nm, bevorzugt 200 - 450 nm.

Ein dreischichtiger bzw. dreiphasiger Aufbau mit einem Kern und zwei Schalen kann wie folgt beschaffen sein. Eine innerste (harte) Schale kann z. B im wesentlichen aus Methylmethacrylat, geringen Anteilen von Comonomeren, wie z. B. Ethylacrylat und einem Vernetzeranteil, z. B. Allylmethacrylat, bestehen. Die mittlere (weiche) Schale kann z. B. aus Butylacrylat und gegebenenfalls Styrol sowie einem Vernetzeranteil, z. B. Allylmethacrylat, aufgebaut sein, während die äußerste (harte) Schale im wesentlichen meist dem Matrixpolymerisat entspricht, wodurch die Verträglichkeit und gute Anbindung an die Matrix bewirkt wird. Der Polybutylacrylat-Anteil am Schlagzähmodifizierungsmittel ist entscheidend für die schlagzähe Wirkung und liegt bevorzugt im Bereich von 20 bis 40 Gew.-%, besonders bevorzugt im Bereich von 25 bis 40 Gew.-%.

### Komponente f)

Die Komponente f) ist eine optionale Komponente, die allein oder zusammen mit der Komponente g) vorliegen kann.

Die Komponente f) kann in der Monomerzusammensetzung mit der Komponente d) übereinstimmen. Die Herstellung kann weitgehend analog erfolgen mit dem Unterschied, daß man die Polymerisationsparameter so wählt, daß man höhermolekulare Polymerisate erhält. Dies kann z. B. durch eine Absenkung der eingesetzten Molekulargewichtsreglermenge geschehen.

Die Komponente f) ist ein höhermolekulares (Meth)acrylat(co)polymer, charakterisiert durch eine Lösungsviskosität in Chloroform bei 25 °C (ISO 1628 - Teil 6) von größer/gleich 65, bevorzugt 68 bis 75 ml/g.

Dies kann einem Molekulargewicht M_{w} (Gewichtsmittel) von 130000 g/mol (Bestimmung von M_{w} mittels Gelpermeationschromatographie unter Bezug auf Polymethylmethacrylat als Eichstandard) entsprechen. Die Bestimmung des Molekulargewichts M_{w} kann beispielsweise per Gelpermeationschromatographie oder per Streulichtmethode erfolgen (siehe z. B. H. F. Mark et al., Encyclopedia of Polymer Science and Engineering, 2nd. Edition, Vol. 10, Seiten 1 ff., J. Wiley, 1989).

Die Komponente f) kann in der Monomerzusammensetzung mit der Komponente d) übereinstimmen. Die Komponente f) ist bevorzugt ein Copolymer aus Methylmethacrylat, Styrol und Maleinsäureanhydrid.

Geeignete Mengenanteile können z. B. sein:
50 bis 90, bevorzugt 70 bis 80 Gew.-% Methylmethacrylat,
10 bis 20, bevorzugt 12 bis 18 Gew.-% Styrol und
5 bis 15, bevorzugt 8 bis 12 Gew.-% Maleinsäureanhydrid

### Komponente g)

Die Komponente g) ist eine optionale Komponente, die allein oder zusammen mit der Komponente f) eingesetzt / verwendet werden kann.

Die Komponente g) ist ein weiteres von d) verschiedenes (Meth)acrylat(co)polymer, charakterisiert durch eine Lösungsviskosität in Chloroform bei 25 °C (ISO 1628 - Teil 6) von 50 bis 55, bevorzugt 52 bis 54 ml/g.

Dies kann einem Molekulargewicht M_{w} (Gewichtsmittel) im Bereich von 80.000 bis 200.000 (g/mol), bevorzugt von 100.000 bis 150.000 entsprechen. Die Bestimmung des Molekulargewichts M_{w} kann beispielsweise per Gelpermeationschromatographie oder per Streulichtmethode erfolgen (siehe z. B. H. F. Mark et al., Encyclopedia of Polymer Science and Engineering, 2nd. Edition, Vol. 10, Seiten 1 ff., J. Wiley, 1989).

Die Komponente g) ist ein Homopolymer oder Copolymer aus mindestens 80 Gew.-% Methylmethacrylat und gegebenenfalls bis zu 20 Gew.-% weiteren mit Methylmethacrylat copolymerisierbaren Monomeren.
Die Komponente g) besteht zu 80 bis 100, vorzugsweise zu 90 - 99,5 Gew.-%, aus radikalisch polymerisierten Methylmethacrylat-Einheiten und gegebenenfalls zu 0 - 20, bevorzugt zu 0,5 - 10 Gew.-% aus weiteren radikalisch polymerisierbaren Comonomeren, z. B. C1- bis C4-Alkyl(meth)acrylaten, insbesondere Methylacrylat, Ethylacrylat oder Butylacrylat. Vorzugsweise liegt das mittlere Molekulargewicht M_{w} der Matrix im Bereich von 90.000 g/mol bis 200.000 g/mol, insbesondere 100.000 g/mol bis 150.000 g/mol.

Die Komponente g) ist bevorzugt ein Copolymer aus 95 bis 99,5 Gew.-% Methylmethacrylat und 0,5 bis 5, bevorzugt 1 bis 4 Gew.-% Methylacrylat.

Die Komponente g) kann eine Vicaterweichungstemperatur VET (ISO 306-B50) von mindestens 107, bevorzugt von 108 bis 114 °C aufweisen. Der Schmelzindex MVR (ISO 1133, 230 °C /3,8 kg) kann z. B. im Bereich von größer/gfeich 2,5 cm³/10 min liegen.

### Die Polymermischung aus den Komponenten d), e), f) und/oder g)

Die Polymermischung kann somit entweder aus den Komponenten d), e) und f), oder aus den Komponenten d), e) und g) oder aus allen vier Komponenten bestehen. Die Komponenten d), e), f) und/oder g) können jeweils für sich als einzelne Polymere als auch als Mischung mehrerer Polymere der entsprechenden Definition vorliegen.

### Eigenschaften der Polymermischung aus den Komponenten d), e), f) und/oder g)

Die Komponenten d), e), f) und/oder g) sind in den Mengenanteilen und in ihrer Zusammensetzung so gewählt, daß ein aus der Polymermischung hergestellter Probekörper gleichzeitig folgende Eigenschaften aufweist:
I. ein Zugmodul (ISO 527) von mindestens 2600, bevorzugt mindestens 2750, besonders bevorzugt mindestens 2850 oder 3000 MPa,
II. eine Vicaterweichungstemperatur VET (ISO 306-B50) von mindestens 109, bevorzugt mindestens 110, insbesondere mindestens 112, z. B. von 110 bis 125 °C,
III. eine Schlagzähigkeit (ISO 179-2D, flatwise) von mindestens 17, bevorzugt mindestens 18, 20, 25 oder 30 KJ/m²
IV. einen Schmelzindex MVR (ISO 1133, 230°C / 3,8 kg) von mindestens 1,5, bevorzugt mindestens 1,65, 2,0 oder 3,0 cm³/10 min.

Übliche Zusatz, Hilfs- und/oder Füllstoffe sind so zu wählen, daß das oben genannte Eigenschaftsprofil möglichst nicht oder höchstens geringfügig beeinträchtigt wird.

### Weitere Eigenschaften

Die Komponenten d), e), f) und/oder g) können weiterhin in den Mengenanteilen und in ihrer Zusammensetzung so gewählt werden, daß ein aus der Polymermischung hergestellter Probekörper auch zumindest einige der folgenden Eigenschaften aufweist:

### Eigenfarbe

Lichttransmissionsgrad T_{D65} nach DIN 5033/7 von mindestens 50, bevorzugt mindestens 55 %.

### Gelbwert

Der Gelbwert, bestimmbar nach DIN 6167 (Lichtart D65, 10° an 3 mm Schichtdicke), soll weniger als 20, bevorzugt weniger als 17 betragen.

### Chemikalienresistenz

Bruchzeit bei Benetzung der Oberfläche mit Isopropanol bei konstanter Randfaserdehnung von
■ 0,39 %: > 1800 s
■ 0,50 %: > 700 s

Bruchzeit bei Benetzung der Oberfläche mit Ethanol/Wasser-Gemisch im Verhältnis 70 : 30 bei konstanter Randfaserdehnung von
■ 0,39 %: > 1800 s
■ 0,50 %: > 200 s

### Oberflächenhärte

Ritzhärte nach Taber bei einer Auflagekraft von
■ 0,7 N: keine Oberflächenbeschädigung detektierbar
■ 1,5 N: < 2,0 µm, bevorzugt < 1,6 µm
■ 3,0 N: < 6 µm, bevorzugt < 5 µm

### Oberflächenglanz

R (60°): > 48 %, bevorzugt > 50 %

### Mengenverhältnisse der Komponenten

Die Komponenten d), e), f) und/oder g) liegen in folgenden Mengenverhältnissen vor, die sich zu 100 Gew.-% addieren.
Komponente d) : 25 bis 75, bevorzugt 40 bis 60,
insbesondere 45 bis 55 Gew.-%.
Komponente e) : 10 bis 60, bevorzugt 10 bis 20 Gew.-%.
Komponente f) und/oder g): 10 bis 50, bevorzugt 12 bis 40 Gew.-%.

Probekörper mit sehr hohen VET-Werten im Bereich von 116 bis 120°C können erhalten werden wenn f) mit 30 bis 45, bevorzugt 35 bis 40 Gew.-% enthalten ist und g) bevorzugt nicht enthalten ist.

Probekörper mit hohen VET-Werten, im Bereich von 114 bis 118 °C und gleichzeitig hohem Glanzgrad, R(60°) = 48 bis 50, können erhalten werden wenn sowohl f) und g) enthalten sind, bevorzugt in Mengenanteilen von f) mit 10 bis 15 Gew.-% und g) mit 15 bis 25 Gew.-%.

Probekörper mit VET-Werten im Bereich von 109 bis 113 °C und gleichzeitig geringer Eigenfarbe, Lichttransmissionsgrad T_{D65} nach DIN 5033/7 im Bereich von 60 bis 65 %, können erhalten werden wenn g) mit 30 bis 40, bevorzugt 33 bis 38 Gew.-% enthalten ist und f) bevorzugt nicht enthalten ist.

Die Polymermischung kann noch übliche Zusatz, Hilfs- und/oder Füllstoffe enthalten.

### Herstellung der erfindungsgemäßen Polymermischung

Die erfindungsgemäße Polymermischung aus a), b) und c) als auch die als Polymermatrix a) und Schlagzähmodifizierungsmittel b) verwendbare Polymermischung aus den Komponenten d), e), f) und/oder g) kann durch trockenes Abmischen der Komponenten, die als Pulver, Körner oder bevorzugt Granulate vorliegen können, hergestellt werden.

Die erfindungsgemäße Polymermischung aus a), b) und c) als auch die als Polymermatrix a) und Schlagzähmodifizierungsmittel b) verwendbare Polymermischung aus den Komponenten d), e), f) und/oder g) kann auch durch Schmelzen und Vermengen der Einzelkomponenten im Schmelzezustand oder durch Schmelzen trockener Vormischungen der Einzelkomponenten zu einer gebrauchsfertigen Formmasse verarbeitet werden erfolgen. Dies kann z. B. in Ein- oder Zweischneckenextrudem erfolgen. Das erhaltene Extrudat kann anschließend granuliert werden. Übliche Zusatz, Hilfs- und/oder Füllstoffe können direkt zugemischt oder später von Endverbraucher nach Bedarf zugegeben werden.

### Übliche Zusatz-, Hilfs- und/oder Füllstoffe

Die erfindungsgemäße Polymermischung aus a), b) und c) als auch die als Polymermatrix a) und Schlagzähmodifizierungsmittel b) verwendbare Polymermischung aus den Komponenten d), e), f) und/oder g) kann in an sich bekannter Weise noch übliche Zusatz-, Hilfs- und/oder Füllstoffe, wie z. B. Thermostabilisatoren, UV-Stabilisatoren, UV-Absorber, Antioxidantien enthalten. Die erfindungsgemäße Polymermischung aus a), b) und c) kann insbesondere lösliche oder unlösliche Farbstoffe bzw. Farbmittel enthalten.

### UV-Stabilisatoren und Radikalfänger

Optional enthaltene UV-Schutzmittel sind z. B. Derivate des Benzophenons, dessen Substituenten wie Hydroxyl- und/oder Alkoxygruppen sich meist in 2-und/oder 4-Stellung befinden. Hierzu zählen 2-Hydroxy-4-n-octoxybenzophenon, 2,4-Dihydroxybenzophenon, 2,2'-Dihydroxy-4-methoxybenzophenon, 2,2',4,4'-Tetrahydroxybenzophenon, 2,2'-Dihydroxy-4,4'-dimethoxybenzophenon, 2-Hydroxy-4-methoxybenzophenon. Desweiteren sind substituierte Benztriazole als UV-Schutz-Zusatz sehr geeignet, wozu vor allem 2-(2-Hydroxy-5-methylphenyl)-benztriazol, 2-[2-Hydroxy-3,5-di-(alpha,alpha-dimethyl-benzyl)-phenyl]-benztriazol, 2-(2-Hydroxy-3,5-di-t-butylphenyl)-benztriazol, 2-(2-Hydroxy-3-5-butyl-5-methylphenyl)-5-chlorbenztriazol, 2-(2-Hydroxy-3,5-di-t-butylphenyl)-5-chlorbenztriazol, 2-(2-Hydroxy-3,5-di-t-amylphenyl)-benztriazol, 2-(2-Hydroxy-5-t-butylphenyl)-benztriazol, 2-(2-Hydroxy-3-sek-butyl-5-t-butylphenyl)-benztriazol und 2-(2-Hydroxy-5-t-octylphenyl)-benztriazol zählen.

Weiterhin einsetzbare UV-Schutzmittel sind 2-Cyano-3,3-diphenylacrylsäureethylester, 2-Ethoxy-2'-ethyl-oxalsäurebisanilid, 2-Ethoxy-5-t-butyl-2'-ethyl-oxalsäurebisanilid und substituierte Benzoesäurephenylester.

Die UV-Schutzmittel können als niedermolekulare Verbindungen, wie sie vorstehend angegeben sind, in den zu stabilisierenden Polymethacrylatmassen enthalten sein. Es können aber auch UV-absorbierende Gruppen in den Matrixpolymermolekülen kovalent nach Copolymerisation mit polymerisierbaren UV-Absorptionsverbindungen, wie z. B. Acryl-, Methacryl oder Allylderivaten von Benzophenon- oder Benztriazolderivaten, gebunden sein.
Der Anteil von UV-Schutzmitteln, wobei dies auch Gemische chemisch verschiedener UV-Schutzmittel sein können, beträgt in der Regel 0,01 bis 1 Gew.-%, vor allem 0,01 bis 0,5 Gew.-%, insbesondere 0,02 bis 0,2 Gew.-% bezogen auf die Gesamtheit aller Bestandteile des erfindungsgemäßen Polymethacrylatharzes.

Als Beispiel für Radikalfänger/UV-Stabilisatoren seien hier sterisch gehinderte Amine, die unter dem Namen HALS (Hindered Amine Light Stabilizer) bekannt sind genannt. Sie können für die Inhibierung von Alterungsvorgängen in Lacken und Kunststoffen, vor allem in Polyolefinkunststoffen, eingesetzt werden (Kunststoffe, 74 (1984) 10, S. 620 bis 623; Farbe + Lack, 96 Jahrgang, 9/1990, S. 689 bis 693). Für die Stabilisierungswirkung der HALS-Verbindungen ist die darin enthaltene Tetramethylpiperidingruppe verantwortlich. Diese Verbindungsklasse kann am Piperidinstickstoff sowohl unsubstituiert als auch mit Alkyl- oder Acylgruppen substituiert sein. Die sterisch gehinderten Amine absorbieren im UV-Bereich nicht. Sie fangen gebildete Radikale ab, was die UV-Absorber wiederum nicht können. Beispiele für stabilisierend wirkende HALS-Verbindungen, die auch als Gemische eingesetzt werden können sind: Bis-(2,2,6,6-tetramethyl-4-piperidyl)-sebacat, 8-Acetyl-3-dodecyl-7,7,9,9-tetramethyl-1,3-8-triazaspiro(4,5)-decan-2,5-dion, Bis-(2,2,6,6-tetramethyl-4-piperidyl)-succinat, Poly-(N-β-hydroxyethyl-2,2,6,6-tetramethyl-4-hydroxypiperidin-bernsteinsäureester) oder Bis-(N-methyl-2,2,6,6-tetramethyl-4-piperidyl)-sebacat.

Angewendet werden die Radikalfänger/UV-Stabilisatoren in den erfindungsgemäßen Polymermischungen in Mengen von 0,01 bis 1,5 Gew.-%, vor allem in Mengen von 0,02 bis 1 Gew.-%, insbesondere in Mengen von 0,02 bis 0,5 Gew.-% bezogen auf die Gesamtheit aller Bestandteile.

### Gleitmittel bzw. Formtrennmittel

Für das Spritzgussverfahren sind insbesondere Gleitmittel bzw. Formtrennmittel von Bedeutung, die ein mögliches Anhaften der Polymermischung an die Spritzgussform vermindern bzw. ganz verhindern können.

Als Hilfsstoffe können demnach Gleitmittel, z. B. ausgewählt aus der Gruppe der gesättigten Fettsäuren mit weniger als C₂₀, bevorzugt C₁₆ bis C₁₈ Kohlenstoffatomen oder der gesättigten Fettalkohole mit weniger als C₂₀, bevorzugt C₁₆ bis C₁₈ Kohlenstoffatomen enthalten sein. Bevorzugt sind geringe Mengenanteile von höchstens 0,25, z. B. 0,05 bis 0,2 Gew.-%, bezogen auf die Polymermischung enthalten.

Geeignet sind z. B. Stearinsäure, Palmitinsäure, technische Gemische aus Stearin- und Palmitinsäure. Weiterhin geeignet sind z. B. n-Hexadecanol, n-Octadecanol, sowie technische Gemische aus n-Hexadecanol und n-Octadecanol.

Ein besonders bevorzugtes Gleit- bzw. Formtrennmittel ist Stearylalkohol.

### Schlagzähmodifizierungsmittel b)

Die Polymermischung enthält ein Schlagzähmodifizierungsmittel auf Basis von vernetzten Poly(meth)acrylaten, welches nicht kovalent an die Polymermatrix a) gebunden ist. Bevorzugt weist die Komponente b) einen zwei- oder dreischaligen Aufbau auf.

Schlagzähmodifizierungsmittel für Polymethacrylat-Kunststoffe sind hinlänglich bekannt. Herstellung und Aufbau von schlagzähmodifizierten Polymethacrylat-Formmassen sind z. B. in EP-A 0 113 924, EP-A 0 522 351, EP-A 0 465 049 EP-A 0 683 028 und US 3,793,402 beschrieben. Ein geeignetes kommerziell erhältliches Produkt ist z. B. METABLEN® IR 441 der Fa. Mitsubishi Rayon.

In der Polymermischung können 5 bis 60, bevorzugt 10 bis 20, besonders bevorzugt 10 bis 15 Gew.-% eines Schlagzähmodifizierungsmittels, das eine Elastomerphase aus vernetzten Polymerisatteilchen ist, enthalten. Das Schlagzähmodifizierungsmittel wird in an sich bekannter Weise durch Perlpolymerisation oder durch Emulsionspolymerisation erhalten.

Im einfachsten Fall handelt es sich um, mittels Perlpolymerisation erhältliche, vernetzte Teilchen mit einer mittleren Teilchengröße im Bereich von 50 bis 500 µm, bevorzugt 80 bis120 µm. Diese bestehen in der Regel aus mindestens 40, bevorzugt 50 - 70 Gew.-% Methylmethacrylat, 20 bis 40, bevorzugt 25 bis 35 Gew.-% Butylacrylat sowie 0,1 bis 2, bevorzugt 0,5 bis 1 Gew.-% eines vernetzenden Monomeren, z. B. einem mehrfunktionellen (Meth)acrylat wie z. B. Allylmethacrylat und gegebenenfalls weiteren Monomeren wie z. B. 0 bis 10, bevorzugt 0,5 bis 8 Gew.-% an C₁-C₄-Alkyl(meth)acrylaten, wie Ethylacrylat oder Butylacrylat, bevorzugt Methylacrylat, oder anderen vinylisch polymerisierbaren Monomeren wie z. B. Stryrol.

Bevorzugte Schlagzähmodifizierungsmittel sind Polymerisatteilchen, die einen zwei-, besonders bevorzugt einen dreischichtigen Kem-Schale-Aufbau aufweisen und durch Emulsionspolymerisation erhalten werden können (s. z. B. EP-A 0 113 924, EP-A 0 522 351, EP-A 0 465 049 und EP-A 0 683 028). Typische Teilchengrößen dieser Emulsionspolymerisate liegen im Bereich von 100 - 500 nm, bevorzugt 200 - 450 nm.

Ein dreischichtiger bzw. dreiphasiger Aufbau mit einem Kern und zwei Schalen kann wie folgt beschaffen sein. Eine innerste (harte) Schale kann z. B im wesentlichen aus Methylmethacrylat, geringen Anteilen von Comonomeren, wie z. B. Ethylacrylat und einem Vernetzeranteil, z. B. Allylmethacrylat, bestehen. Die mittlere (weiche) Schale kann z. B. aus Butylacrylat und gegebenenfalls Styrol sowie einem Vernetzeranteil, z. B. Allylmethacrylat, aufgebaut sein, während die äußerste (harte) Schale im wesentlichen meist dem Matrixpolymerisat entspricht, wodurch die Verträglichkeit und gute Anbindung an die Matrix bewirkt wird. Der Polybutylacrylat-Anteil am Schlagzähmodifizierungsmittel ist entscheidend für die schlagzähe Wirkung und liegt bevorzugt im Bereich von 20 bis 40 Gew.-% , besonders bevorzugt im Bereich von 25 bis 40 Gew.-%.

### Mattierung c): Kunststoffpartikel aus vernetzten Polymerisaten auf

### Basis des Polymethylmethacrylats, des Polystyrols oder von Polysilikonen

Die Polymermischung enthält 1 bis 15, bevorzugt 1 bis 12 Gew.-% Kunststoffpartikel aus vernetzten Polymerisaten auf Basis des Polymethylmethacrylats, des Polystyrols und/oder Polysilikonen, mit einer mittleren Teichengröße im Bereich von 1 bis 30, bevorzugt von 2 bis 20, insbesondere von 3 bis 15 µm.

Die Ermittlung der Teilchengröße sowie der Teilchengrößenverteilung kann mittels Laserextinktionsverfahren erfolgen. Hierbei kann ein Galay-CIS der Firma L.O.T. GmbH verwendet werden, wobei die Messmethode zur Bestimmung der Teilchengröße sowie der Teilchengrößenverteilung im Benutzerhandbuch enthalten ist. Die mittlere Teilchengröße von V₅₀ ergibt sich aus dem Median des Gewichtsmittels, wobei 50 Gew.-% der Teilchen kleiner oder gleich und 50 Gew.-% dieser Teilchen größer oder gleich diesem Wert sind.

Die erfindungsgemäß verwendbaren Kunststoffpartikel sind nicht besonders beschränkt. So ist die Art des Kunststoffs aus dem die Kunststoffpartikel hergestellt werden weitgehend unkritisch.

Eine Gruppe bevorzugter Kunststoffpartikel, die als Mattierungsmittel eingesetzt werden können, enthalten Silikone. Solche Partikel werden zum Beispiel durch Hydrolyse und Polykondensation von Organotrialkoxysilanen und/oder Tetraalkoxysilanen erhalten, welche durch die Formeln

R¹Si(OR²)₃

und

Si(OR²)₄

beschrieben werden, worin R¹ beispielsweise eine substituierte oder unsubstituierte Alkylguppe, eine Alkenylgruppe oder eine Phenylgruppe darstellt, und der Rest R² der hydrolisierbaren Alkoxygruppe eine Alkylgruppe, wie Methyl, Ethyl oder Butyl oder eine Alkoxy-substituierte Kohlenwasserstoffgruppe, wie 2-Methoxyethyl oder 2-Ethoxyethyl darstellt. Beispielhafte Organotrialkoxysilane sind Methyltrimethoxysilan, Methyltriethoxysilan, Methyl-n-propoxysilan, Methyltriisopropoxysilan und Methyltris(2-methoxyethoxy)silan.

Die zuvor genannten Silanverbindungen und Verfahren zur Herstellung sphärischer Silikonpartikel sind der Fachwelt bekannt und in den Schriften EP 1 116 741, JP 63-077940 und JP 2000-186148 beschrieben.

In der vorliegenden Erfindung besonders bevorzugt eingesetzte Mattierungsmittel aus Silikon sind von der Firma GE Bayer Silicones unter den Handelsnamen TOSPEARL® 120 und TOSPEARL® 3120 erhältlich.

Eine weitere Gruppe bevorzugter Kunststoffpartikel sind aufgebaut aus, mit der Maßgabe, daß b1) und/oder b2) enthalten sein müssen:
b1) 0 bis 99,9 Gew.-Teilen von Monomeren, die aromatische Gruppen als Substituenten aufweisen, wie beispielsweise Styrol, α-Methylstyrol, ringsubstituierte Styrole, Phenyl(meth)acrylat, Benzyl(meth)acrylat, 2-Phenylethyl(meth)acrylat, 3-Phenylpropyl(meth)acrylat oder Vinylbenzoat; sowie
b2) 0 bis 99,9 Gew.-Teilen eines Acryl- und/oder Methacrylsäureesters mit 1 bis 12 C-Atomen im aliphatischen Esterrest, die mit den Monomeren b1) copolymerisierbar sind, wobei beispielhaft genannt seien:
   Methyl(meth)acrylat, Ethyl(meth)acrylat, n-Propyl(meth)acrylat, i-Propyl(meth)acrylat, n-Butyl(meth)acrylat, i-Butyl(meth)acrylat, tert.Butyl(meth)acrylat, Cyclohexyl(meth)acrylat, 3,3,5-Trimethylcyclohexyl(meth)acrylat, 2-Ethylhexyl(meth)acrylat, Norbornyl(meth)acrylat oder Isobornyl(meth)acrylat;
b3) 0,1 bis 15 Gew.-Teilen vernetzenden Comonomeren, die mindestens zwei ethylenisch ungesättigte, radikalisch mit b1) und/oder mit b2) copolymerisierbare Gruppen aufweisen, wie beispielsweise Divinylbenzol, Glykoldi(meth)acrylat, 1,4-Butandioldi(meth)acrylat, Allyl(meth)acrylat, Triallylcyanurat, Diallylphthalat, Diallylsuccinat, Pentaerythrittetra(meth)acrylat oder Trimethylolpropantri(meth)acrylat, wobei sich die Comonomeren b1), b2) und b3) zu 100 Gew.-Teilen ergänzen.

Geeignet sind z. B. Kunststoffpartikel, die aus mindestens 80 Gew.-% Styrol und mindestens 0,5 Gew.-% Divinylbenzol bestehen.

Die Herstellung von vernetzten Kunststoffpartikeln ist in der Fachwelt bekannt. So können die Streupartikel durch Emulsionspolymerisation hergestellt werden, wie beispielsweise in EP-A 342 283 oder EP-A 269 324 beschrieben, ganz besonders bevorzugt durch Polymerisation in organischer Phase, wie beispielsweise in der deutschen Patentanmeldung P 43 27 464.1 beschrieben, wobei bei der letztgenannten Polymerisationstechnik besonders enge Teilchengrößenverteilungen oder anders ausgedrückt besonders geringe Abweichungen der Teilchendurchmesser vom mittleren Teilchendurchmesser auftreten.

Besonders bevorzugt werden Kunststoffpartikel eingesetzt, die eine Temperaturbeständigkeit von mindestens 200°C, insbesondere von mindestens 250°C aufweisen, ohne dass hierdurch eine Beschränkung erfolgen soll. Hierbei bedeutet der Begriff Temperaturbeständig, dass die Teilchen im wesentlichen keinem wärmebedingten Abbau unterliegen. Ein wärmebedingter Abbau führt in unerwünschter Weise zu Verfärbungen, so dass das Kunststoffmaterial unbrauchbar wird.

Besonders bevorzugte Partikel sind unter anderem von der Firma Sekisui unter dem Handelsnamen ®Techpolymer SBX-6, ®Techpolymer SBX-8, ®Techpolymer SBX-12 und ®Techpolymer MBX-8 erhältlich.

Die zuvor beschriebenen Streupartikel können einzeln oder als Mischung von zwei oder mehr Sorten eingesetzt werden.

Die Ermittlung der Teilchengröße sowie der Teilchengrößenverteilung kann mittels Laserextinktionsverfahren erfolgen. Hierbei kann ein Galay-CIS der Firma L.O.T. GmbH verwendet werden, wobei die Messmethode zur Bestimmung der Teilchengröße sowie der Teilchengrößenverteilung im Benutzerhandbuch enthalten ist. Die mittlere Teilchengröße von V₅₀ ergibt sich aus dem Median des Gewichtsmittels, wobei 50 Gew.-% der Teilchen kleiner oder gleich und 50 Gew.-% dieser Teilchen größer oder gleich diesem Wert sind.

### Verfahren zur Herstellung von spitzgegossenen Formkörpern

Die erfindungsgemäße Polymermischung eignet sich als Ausgangsstoff für Verfahren zur Herstellung von spitzgegossenen Formkörpern in an sich bekannter Weise. Dabei werden bei der Verwendung von Spritzgusswerkzeugen mit Formhohlräumen mit glatten bzw. spiegelglatten inneren Oberflächen (Kavitäten) mattierte Formkörper erhalten. Bei Verwendung von Spritzgusswerkzeugen mit Formhohlräumen mit rauen inneren Oberflächen (Kavitäten) werden noch intensiver mattierte Formkörper erhalten.

### Spritzgegossene Formkörper

Die Polymermischung kann zur Herstellung von spritzgegossenen Formkörpern verwendet werden, die folgende Eigenschaften aufweisen:

Die erfindungsgemäßen spritzgegossenen Formkörper weisen einen Rauigkeitswert R_{z} nach DIN 4768 von mindestens 0,7, bevorzugt 1,0 bis 2,0 µm auf. Der Glanzgrad (R 60°) nach DIN 67530 (01/1982) beträgt von höchstens 40, bevorzugt höchtens 38, insbesondere 30 bis 38. Die Vicaterweichungstemperatur VET (ISO 306-B50) beträgt je nach verwendetem Matrixkunststoff mindestens 90, bevorzugt mindestens 95, besonders bevorzugt mindestens 100 °C, insbesondere 90 bis 120, 115 bis 135, 130 bis 170 °C.
Weitere Eigenschaften können insbesondere sein:
I. ein Zugmodul (ISO 527) von mindestens 2600 Mpa,
II. eine Vicaterweichungstemperatur VET (ISO 306-B50) von mindestens 108 °C,
III. eine Schlagzähigkeit (ISO 179-2D, edgewise) von mindestens 10 KJ/m², und
IV. einen Schmelzindex MVR (ISO 1133, 230 °C /3,8 kg) von mindestens 0,5 cm³/10 min.

### Verwendungen

Die spritzgegossenen Formkörper können als Teile von Haushaltsgeräten, Kommunkationsgeräten, Hobby- oder Sportgeräten, Karosserieteile oder Teile von Karosserieteilen im Automobil-, Schiffs- oder Flugzeugbau verwendet werden. Typische Automobilaußenteile sind z. B. Spoiler, Blenden, Dachmodule oder Außenspiegelgehäuse.

### Vorteilhafte Wirkungen der Erfindung

Aus den erfindungsgemäßen Polymermischungen bzw. Formmassen lassen sich mattierte Formkörper, insbesondere Spritzgussteile, herstellen, die hohen Materialanforderungen, wie sie z. B. für Automobilaußenteile bestehen, genügen. Dabei ist es gelungen vier besonders wichtige Anforderungen, Zugmodul, Vicaterweichungstemperatur, Schlagzähigkeit, und Schmelzindex gleichzeitig in für Verarbeitung und Anwendung geeigneten Größenordnungen sicherzustellen. Insbesondere bedingt die gute Fließfähigkeit die geforderte Verarbeitbarkeit im Spritzguß auch bei anspruchsvollen Teilegeometrien. Dabei ist es überraschend, daß gleichzeitig Spritzgussteile von hoher ausreichender Zähigkeit, hoher Witterungs- und Temperaturbeständigkeit erhalten werden können. Darüber hinaus werden noch eine Reihe von weiteren wünschenswerten Eigenschaften, wie z. B. Chemikalienresistenz, Gelbwert und Eigenfarbe in durchaus befriedigender Weise erreicht. Über das Mischungsverhältnis der Komponenten a) bis c) kann das Eigenschaftsprofil individuell auf die Anforderungen im Einzelfall eingestellt werden.

### BEISPIELE

### Polymermatrix a) + Schlagzähmodifizierungsmittel b)

Es wird eine Mischung von (Meth)acrylat(co)polymeren eingesetzt, die aus den Komponenten d), e) und f) besteht, wobei die Komponente e) ein Schlagzähmodifizierungsmittel auf Basis von vernetzten Poly(meth)acrylaten ist, welches nicht kovalent an die Matrix gebunden ist und demnach der Komponente b) der erfindungsgemäßen Polymermischung entspricht. Die Komponenten d) und f) stellen die Polymermatrix a) dar.

### Herstellung der Komponente d):

Eine Monomermischung aus 6355 g Methylmethacrylat, 1271 g Styrol und 847 g Maleinsäureanhydrid wird mit 1,9 g tert.-Butylperneodecanoat und 0,85 g tert.-Butylperoxi-3,5,5-trimethylhexanoat als Polymerisationsinitiator und 19,6 g 2-Mercaptoethanol als Molekulargewichtsregler sowie mit 4,3 g Palmitinsäure versetzt.

Das resultierende Gemisch wird in eine Polymerisationskammer gefüllt und 10 Minuten entgast. Danach wird im Wasserbad 6 Stunden bei 60°C, nachfolgend 30 Stunden bei 55°C Wasserbadtemperatur polymerisiert. Nach etwa 30 Stunden erreicht das Polymerisationsgemisch mit 126°C seine Maximaltemperatur. Nach Entfernung der Polymerisationskammer aus dem Wasserbad wird das Polymerisat in der Polymerisationskammer noch 7 Stunden bei 117°C im Luftschrank getempert.

Das resultierende Copolymerisat ist klar und nahezu farblos und besitzt eine V.N. (Lösungsviskositätszahl nach ISO 1628-6, 25°C, Chloroform) von 48,7ml/g. Die Fließfähigkeit des Copolymerisats wurde nach ISO 1133 bei 230°C und 3,8kg mit MVR = 3,27 cm³/10min bestimmt.
Die Komponente d) ist das oben beschriebene Copolymerisat aus 75 Gew.-% Methylmethacrylat , 15 Gew.-% Styrol und 10 Gew.-% Maleinsäureanhydrid.
Als Komponente e) wurde eingesetzt: ein handelsübliches Schlagzähmodifizierungsmittel METABLEN^{®} IR 441 der Fa. Mitsubishi Rayon und entspricht somit der Komponente b) der erfindungsgemäßen Polymermischung.
Als Komponente f) wurde eingesetzt: Ein handelsübliches Copolymerisat aus 75 Gew.-% Methylmethacrylat , 15 Gew.-% Styrol und 10 Gew.-% Maleinsäureanhydrid mit einer Lösungsviskositätszahl nach ISO 1628-6, 25°C, Chloroform von 68 ml/g

### Mattierungsmittel c)

Es wurden verschiedene Mattierungsmittel eingesetzt

### Mattierungsmittel 1)

### Handelsprodukt ACEMATT® OP278 (Degussa AG)

Hierbei handelt es sich um ein Perlpolymerisat mit einer Teilchengröße von ca. 200 µm. In diesen Perlen liegen in einer PMMA Matrix ca. 7 µm große Partikel aus vernetztem Styrol - Butylacrylat - Copolymerisat (Verhältnis Styrol /Butylacrylat = 66,7 / 33,3) vor. Das Verhältnis der Matrix zu den vernetzten Partikeln beträgt 27 zu 73. Diese feinen Partikel wirken als Mattierungsmittel - das Matrixmaterial wird bei der Compoundierung aufgeschlossen.

### Mattierungsmittel 2)

Ein ca. 20 µm großes Perlpolymerisat aus vernetztem Polymer, hauptsächlich bestehend aus Methylmethacrylat und Benzylmethacrylat.

### Mattierungsmittel 3)

Die ca. 45 µm großen Partikel des Perlpolymerisats bestehen aus einem vernetztem Methylmethacrylat - Styrol - Copolymerisat.

### Mattierungsmittel 4)

Handelsprodukt Techpolymer^{®} SBX 8, Fa. Sekisui Plastics Co., Ltd.: Ca. 8 µm große Partikel aus vernetztem Polystyrol.

### Abmischung der Formmassen

Das Polymerblend wird mit den jeweiligen Mattierungsmittel mittels Extruder abgemischt. Die Zusammensetzungen der einzelnen Beispiele sind in Tabelle 1 angegeben.

### Prüfung der Formmassen

Aus den abgemischten Formmassen wurden Prüfkörper durch Spritzguss hergestellt. Die entsprechenden Prüfkörper wurden nach folgenden Methoden geprüft:
- MVR (230°C/3,8kg):: Bestimmung des Volumen-Fließindex, Prüfnorm ISO 1133: 1997
- Viskosität ηs (220°C/5MPa):: Bestimmung der Schmelzviskosität, Prüfnorm: DIN 54811: 1984
- Strangaufweitung B:: Bestimmung der Strangaufweitung, Prüfnorm: DIN 54811: 1984
- VET (16h/80°C):: Bestimmung der Vicat-Erweichungstemperatur mit der Vicat - Anlage - Prüfnorm DIN ISO 306- B50: Aug. 1994
- Schlagzähigkeit:: Bestimmung der Charpy - Schlagzähigkeit, Prüfnorm: ISO 179 edgewise
- E-Modul: Bestimmung des E-Moduls, Prüfnorm: ISO 527-2
- Glanz:: Glanzmessung nach DIN 67530 (01/1982): "Reflektometer als Hilfsmittel zur Glanzbeurteilung an ebenen Anstrich- und Kunststoff-Oberflächen"
- Oberflächenrauhigkeit:: Rauheitsgrößen Rₐ, R_{z} und Rₘₐₓ nach DIN 4768. Hier ist noch die Angabe des cut offs sinnvoll: Ra-Werte <2 µm werden mit einem cut off von 0,8 mm, bei Ra größer 2 µm mit einem cut off von 2,5 mm ermittelt.

Die Prüfkörper zur Bestimmung des Glanzes und der Oberflächenrauhigkeit haben die Dimension 110 x 110 x 3 mm und wurden unter Verwendung einer spiegelglatten Kavität hergestellt (Spritzgussmaschine DEMAG D150, Fa. Demag; Schmelzetemperatur 250 °C, Werkzeugtemperatur 70 °C, Spritzdruck: 120-160 bar, Nachdruck: 75 - 80 bar). Die Glanzmessungen wurden mit einem Labor-Reflektometer RL von der Fa. Dr. Lange - die Rauheitsmessungen mit dem Form Talysurf 50, Hersteller ist die Rank Taylor Hobson GmbH durchgeführt.
Die Ergebnisse der Prüfungen an den Abmischungen und den entsprechenden Formteilen sind in Tabelle 2 zu sehen. Anhand der Beispiele erkennt man deutlich, die Verbesserungen, welche durch die hier beschriebene Erfindung erreicht werden:
- Mit Hilfe von Mattierungsmittel mit einer Teilchengrößen von 6 bis 20 µm in Konzentrationen von 5 bis 10 % (s. Beispiele 1, 2, 3 und 4) in der Matrix vermindert man deutlich den Glanz (Reflektionswerte bei 60° von 89,9 auf 31 bis 38). Dieser Effekt zeigt sich auch deutlich an dem Anstieg der Rauhigkeit (Rz von 0,09 auf 0,73 bis 1,28 µm).
   Auch wird die Vicat - Erweichungstemperatur nicht mehr als um 7 °C (6 %) erniedrigt. Zusätzlich bleiben die mechanischen Eigenschaften der Formkörper auf akzeptablen Niveau und die Formmassen lassen sich ähnlich wie das Ausgangsmaterial verarbeiten (s. rheologische Werte)
- Bei Einsatz von gröberen Mattierungsmitteln im ähnlichen Konzentrationsbereich (12 %, Vergleichsbeispiel 2) erhöht sich die Rauhigkeit auch deutlich, allerdings ist die Oberfläche nicht mehr samtmatt bis fein gekörnt sondern grob gekörnt. Auch geht der Glanz bei 60° nicht so effektiv wie bei den in den Beispielen genannten Mattierungsmitteln zurück.

**Tabelle 1: Zusammensetzung der einzelnen Beispiele (Einwaagen in kg)**

| | | Vergleich-bsp. 1 | Vergleich-bsp. 2 | Bsp. 1 | Bsp. 2 | Bsp. 3 | Bsp. 4 |
|---|---|---|---|---|---|---|---|
| Polymerblend | | | | | | | |
| | Komponente f) | 36,8 | 36,8 | 36,8 | 36,8 | 36,8 | |
| | Komponente d) | 50,0 | 50,0 | 50,0 | 50,0 | 50,0 | |
| | Komponente e) = b) | 13,0 | 13,0 | 13,0 | 13,0 | 13,0 | |
| | Schlagzähmodifizierungsmittel | | | | | | |
| | Stearyalkohol | 0,2 | 0,2 | 0,2 | 0,2 | 0,2 | |
| Mattierungsmittel | | | | | | | |
| | Mattierungsmittel 1 : ACEMATT® OP 278 | | | 5,26 | 11,11 | | |
| | Mattierungsmittel 2 | | | | | 11,1 | |
| | Mattierungsmittel 3 | | 13,63 | | | | |
| | Mattierungsmittel 4 : Techpolymer®SBX-8 | | | | | | 11,1 |

Die Beispiele und Vergleichsbeispiele wurden schwarz eingefärbt:
Hierzu wurden zusätzlich 0,39 % Thermoplastblau 684, 0,21% Thermoplastgelb 104 und 0,23 % Printex 140 V Degussa bezogen auf die Matrix (Polymerblend) bei der Compoundierung der Polymerblends verwendet.

**Tabelle 2: Prüfergebnisse an den Spritzgussteilen und den entsprechenden Formteilen**

| | Vergleichbsp. 1 | Vergleichbsp. 2 | Bsp. 1 | Bsp.2 | Bsp.3 | Bsp.4 |
|---|---|---|---|---|---|---|
| **Glanz** | | | | | | |
| R(20°) | 83,2 | 12,7 | 8,9 | 6,4 | 8,9 | 7 |
| R(60°) | 89,9 | 42,3 | 38 | 31 | 35,6 | 33,2 |
| R(85°) | 99,1 | 66,1 | 72,3 | 68,1 | 61,7 | 68,5 |
| **Rauhigkeit** | | | | | | |
| Mittenrauhwert Ra [µm] | 0,01 | 0,14 | 0,12 | 0,2 | 0,14 | 0,17 |
| Gem. Rauhtiefe Rz [µm] | 0,09 | 1,03 | 0,73 | 1,17 | 1,28 | 1,26 |
| Max. Rauhtiefe Rmax [µm] | 0,11 | 1,49 | 0,97 | 1,56 | 1,69 | 1,62 |
| **vis. Beurteilung der** Spritzgußplatten | glatt, glänzend | grob gekörnt | samtmatt | samtmatt | fein gekörnt | samtmatt |
| **Mechanik** | | | | | | |
| Charpy-SZ [kJ/m²] (23/50°C) | 20 | 17,2 | 17,9 | 14,9 | 18 | 11,6 |
| E-Modul [MPa] (1mm/min) | 2990 | 3060 | 2970 | 2820 | 3060 | 3050 |
| **Wärmeformbeständigkeit** | | | | | | |
| VST (Minivicat B) | 117 | 115 | 114 | 110 | 114 | 117 |
| **Rheologie** | | | | | | |
| Viskosität eta-s [Pa s] | 2720 | 3160 | 2310 | 2130 | 3200 | 3360 |
| Strangaufw. B [%] | 72 | 52 | 72 | 73 | 53 | 49 |
| MVR [cm³/10min] | 2 | 1,4 | 2,1 | 2,3 | 1,5 | 1,5 |

## Patentansprüche

1. Polymermischung, enthaltend
a) eine Polymermatrix, die aus einem (Meth)acrylat(co)polymeren oder einer Mischung von (Meth)acrylat(co)polymeren mit einer Vicaterweichungstemperatur VET (ISO 306-B50) von mindestens 104 °C und/oder einem (Meth)acrylimid(co)polymeren besteht,
b) ein Schlagzähmodifizierungsmittel auf Basis von vernetzten Poly(meth)acrylaten, welches nicht kovalent an die Polymermatrix a) gebunden ist,
c) 1 bis 15 Gew.-% Kunststoffpartikel aus vernetzten Polymerisaten auf Basis des Polymethylmethacrylats, des Polystyrols und/oder Polysilikonen, mit einer mittleren Teichengröße im Bereich von 1 bis 30 µm,
wobei a), b) und c) sich zu 100 Gew.-% addieren, wobei die Polymermischung noch übliche Zusatz, Hilfs- und/oder Füllstoffe enthalten kann und ein aus der Polymermischung spritzgegossener Probekörper gleichzeitig folgende Eigenschaften aufweist:
einen Rauigkeitswert R_{z} nach DIN 4768 von mindestens 0,7 µm,
einen Glanzgrad (R 60°) nach DIN 67530 von höchstens 40, sowie eine Vicaterweichungstemperatur VET (ISO 306-B50) von mindestens 90 °C.

2. Polymermischung nach Anspruch 1, **dadurch gekennzeichnet, daß** die Komponenten in folgenden Mengenverhältnissen vorliegen
a) 25 bis 75 Gew.-%
b) 5 bis 60 Gew.-%
c) 1 bis 15 Gew.-%

3. Polymermischung nach Anspruch 1 oder 2, **dadurch gekennzeichnet, daß** das Schlagzähmodifizierungsmittel b) einen zwei- oder dreischaligen Aufbau aufweist.

4. Polymermischung nach einem oder mehreren der Ansprüche 1 bis 3 , **dadurch gekennzeichnet, daß** die Polymermatrix a) aus einem (Meth)acrylat(co)polymeren aus 96 bis 100 Gew.-% Methylmethacrylat und 0 bis 4 Gew.-% Methylacrylat, Ethylacrylat und/oder Butylacrylat besteht.

5. Polymermischung nach einem oder mehreren der Ansprüche 1 bis 3 , **dadurch gekennzeichnet, daß** die Polymermatrix a) ein Copolymer aus Methylmethacrylat, Styrol und Maleinsäureanhydrid ist.

6. Polymermischung nach Anspruch 5, **dadurch gekennzeichnet, daß** die Polymermatrix a) ein Copolymer aus
50 bis 90 Gew.-% Methylmethacrylat,
10 bis 20 Gew.-% Styrol und
5 bis 15 Gew.-% Maleinsäureanhydrid ist.

7. Polymermischung nach einem oder mehreren der Ansprüche 1 bis 3 , **dadurch gekennzeichnet, daß** man die Bestandteile a) und b) der Polymermischung einzeln oder in Form eines Compounds einbringt, der die folgenden Komponenten enthält,
d) ein niedermolekulares (Meth)acrylat(co)polymer,
charakterisiert durch eine Lösungsviskosität in Chloroform bei 25 °C (ISO 1628 - Teil 6) von kleiner/gleich 55 ml/g
e) ein Schlagzähmodifizierungsmittel auf Basis von vernetzten Poly(meth)acrylaten
f) ein höhermolekulares (Meth)acrylat(co)polymer,
charakterisiert durch eine Lösungsviskosität in Chloroform bei 25 °C (ISO 1628 - Teil 6) von größer/gleich 65 ml/g und/oder
g) ein weiteres von d) verschiedenes (Meth)acrylat(co)polymer,
charakterisiert durch eine Lösungsviskosität in Chloroform bei 25 °C (ISO 1628 - Teil 6) von 50 bis 55 ml/g
wobei die Komponenten d), e), f) und/oder g) jeweils für sich genommen als einzelne Polymere als auch als Mischungen von Polymeren verstanden werden können,
wobei d), e), f) und/oder g) sich zu 100 Gew.-% addieren,
wobei die Polymermischung noch übliche Zusatz, Hilfs- und/oder Füllstoffe enthalten kann und
wobei ein aus der Polymermischung der Komponenten d), e), f) und/oder g) hergestellter Probekörper gleichzeitig folgende Eigenschaften aufweist:
I. ein Zugmodul (ISO 527) von mindestens 2600 MPa,
II. eine Vicaterweichungstemperatur VET (ISO 306-B50) von mindestens 109 °C,
III. eine Schlagzähigkeit (ISO 179-2D, flatwise) von mindestens 17 KJ/m², und
IV. einen Schmelzindex MVR (ISO 1133, 230 °C /3,8 kg) von mindestens 1,5 cm³/10 min.

8. Polymermischung nach Anspruch 7, **dadurch gekennzeichnet, daß** die Komponenten in folgenden Mengenverhältnissen vorliegen und sich zu 100 Gew.-% addieren:
d) 25 bis 75 Gew.-%
e) 10 bis 60 Gew.-%
f) und/oder g) 10 bis 50 Gew.-%

9. Polymermischung nach Anspruch 7 oder 8, **dadurch gekennzeichnet, daß** die Komponente d) ein Copolymer aus Methylmethacrylat, Styrol und Maleinsäureanhydrid ist.

10. Polymermischung nach Anspruch 9, **dadurch gekennzeichnet, daß** die Komponente d) ein Copolymer aus
50 bis 90 Gew.-% Methylmethacrylat,
10 bis 20 Gew.-% Styrol und
5 bis 15 Gew.-% Maleinsäureanhydrid ist.

11. Polymermischung nach einem oder mehreren der Ansprüche 7 bis 10 , **dadurch gekennzeichnet, daß** die Komponente e) einen zwei- oder dreischaligen Aufbau aufweist.

12. Polymermischung nach einem oder mehreren der Ansprüche 7 bis 11 , **dadurch gekennzeichnet, daß** die Komponente f) ein Copolymer aus Methylmethacrylat, Styrol und Maleinsäureanhydrid ist.

13. Polymermischung nach Anspruch 12, **dadurch gekennzeichnet, daß** die Komponente f) ein Copolymer aus
50 bis 90 Gew.-% Methylmethacrylat,
10 bis 20 Gew.-% Styrol und
5 bis 15 Gew.-% Maleinsäureanhydrid ist.

14. Polymermischung nach einem oder mehreren der Ansprüche 7 bis 13, **dadurch gekennzeichnet, daß** die Komponente g) ein Homopolymer oder Copolymer aus mindestens 80 Gew.-% Methylmethacrylat und gegebenenfalls bis zu 20 Gew.-% weiteren mit Methylmethacrylat copolymerisierbaren Monomeren ist.

15. Polymermischung nach Anspruch 14, **dadurch gekennzeichnet, daß** die Komponente g) ein Copolymer aus 95 bis 99,5 Gew.-% Methylmethacrylat und 0,5 bis 5 Gew.-% Methylacrylat, Ethylacrylat und/oder Butylacrylat ist.

16. Polymermischung nach einem oder mehreren der Ansprüche 1 bis 15, **dadurch gekennzeichnet, daß** als Hilfsstoff ein Gleitmittel enthalten ist.

17. Polymermischung nach Anspruch 16, **dadurch gekennzeichnet, daß** als Formtrennmittel Stearylalkohol enthalten ist.

18. Polymermischung nach einem oder mehreren der Ansprüche 1 bis 17, **dadurch gekennzeichnet, daß** sie in Form eines Formmassegranulats vorliegt.

19. Verfahren zur Herstellung von spitzgegossenen Formkörpern in an sich bekannter Weise, **dadurch gekennzeichnet, daß** man eine Polymermischung nach einem oder mehreren der Ansprüche 1 bis 18 als Ausgangsstoff einsetzt.

20. Spritzgegossener Formkörper, herstellbar im einem Verfahren nach Anspruch 19.

21. Spritzgegossener Formkörper nach Anspruch 20, **dadurch gekennzeichnet, daß** er einen Rauigkeitswerte R_{z} nach DIN 4768 von mindestens 0,7 µm, einen Glanzgrad (R 60°) nach DIN 67530 von höchstens 40 und eine Vicaterweichungstemperatur VET (ISO 306-B50) von mindestens 90 °C aufweist.

22. Spritzgegossener Formkörper nach Anspruch 20 oder 21, **dadurch gekennzeichnet, daß** er eine oder mehrere der folgenden Eigenschaften aufweist
I. ein Zugmodul (ISO 527) von mindestens 2600 Mpa,
II. eine Vicaterweichungstemperatur VET (ISO 306-B50) von mindestens 108 °C,
III. eine Schlagzähigkeit (ISO 179-2D, edgewise) von mindestens 10 KJ/m², und
IV. einen Schmelzindex MVR (ISO 1133, 230 °C / 3,8 kg) von mindestens 0,5 cm³/10 min.

23. Verwendung der spritzgegossenen Formkörper nach einem oder mehreren der Ansprüche 20 bis 23 als Teile von Haushaltsgeräten, Kommunikationsgeräten, Hobby- oder Sportgeräten, Karosserieteile oder Teile von Karosserieteilen im Automobil-, Schiffs- oder Flugzeugbau.

## Claims

1. Polymer mixture, comprising
a) a polymer matrix which is composed of a (meth)acrylate (co)polymer or of a mixture of (meth)acrylate (co)polymers with a Vicat softening point VSP (ISO 306-B50) of at least 104°C and/or of a (meth)acrylimide (co)polymer,
b) an impact modifier which is based on crosslinked poly(meth)acrylates and which does not have covalent bonding to the polymer matrix a),
c) from 1 to 15% by weight of plastics particles composed of crosslinked polymers based on polymethyl methacrylate, on polystyrene and/or on polysilicones, with a median particle size in the range from 1 to 30 µm,
where a), b) and c) give a total of 100% by weight, and where the polymer mixture may also comprise conventional additives, auxiliaries and/or fillers, and a test specimen injection-moulded from the polymer mixture simultaneously has the following properties:
a roughness value R_{z} to DIN 4768 of at least 0.7 µm,
a gloss (R 60°) to DIN 67530 of at most 40, and
also a Vicat softening point VSP (ISO 306-B50) of at least 90°C.

2. Polymer mixture according to Claim 1, **characterized in that** the components are present with the following quantitative proportions
a) from 25 to 75% by weight
b) from 5 to 60% by weight
c) from 1 to 15% by weight.

3. Polymer mixture according to Claim 1 or 2, **characterized in that** the impact modifier b) has a two- or three-shell structure.

4. Polymer mixture according to one or more of Claims 1 to 3, **characterized in that** the polymer matrix a) is composed of a (meth)acrylate (co)polymer composed of from 96 to 100% by weight of methyl methacrylate and from 0 to 4% by weight of methyl acrylate, ethyl acrylate and/or butyl acrylate.

5. Polymer mixture according to one or more of Claims 1 to 3, **characterized in that** the polymer matrix a) is a copolymer composed of methyl methacrylate, styrene and maleic anhydride.

6. Polymer mixture according to Claim 5, **characterized in that** the polymer matrix a) is a copolymer composed of
from 50 to 90% by weight of methyl methacrylate,
from 10 to 20% by weight of styrene and
from 5 to 15% by weight of maleic anhydride.

7. Polymer mixture according to one or more of Claims 1 to 3, **characterized in that** the constituents a) and b) of the polymer mixture are introduced individually or in the form of a compounded material which comprises the following components
d) a low-molecular-weight (meth)acrylate (co)polymer,
**characterized by** a solution viscosity in chloroform at 25°C (ISO 1628 - Part 6) smaller than or equal to 55 ml/g
e) an impact modifier based on crosslinked poly(meth)acrylates
f) a relatively high-molecular-weight (meth)acrylate (co)polymer,
**characterized by** a solution viscosity in chloroform at 25°C (ISO 1628 - Part 6) higher than or equal to 65 ml/g and/or
g) a (meth) acrylate (co)polymer other than d),
**characterized by** a solution viscosity in chloroform at 25°C (ISO 1628 - Part 6) of from 50 to 55 ml/g
where each of the components d), e), f) and/or g) may be an individual polymer or else a mixture of polymers,
and where d), e), f) and/or g) give a total of 100% by weight,
and where the polymer mixture may also comprise conventional additives, auxiliaries and/or fillers and
where a test specimen produced from the polymer mixture of components d), e), f) and/or g) simultaneously has the following properties:
I. a tensile modulus (ISO 527) of at least 2600 MPa,
II. a Vicat softening point VSP (ISO 306-B50) of at least 109°C,
III. an impact strength (ISO 179-2D, flatwise) of at least 17 kJ/m², and
IV. a melt index MVR (ISO 1133, 230°C/3.8 kg) of at least 1.5 cm³/10 min.

8. Polymer mixture according to Claim 7,
**characterized in that** the components are present with the following quantitative proportions and give a total of 100% by weight:
d) from 25 to 75% by weight
e) from 10 to 60% by weight
f) and/or g) from 10 to 50% by weight.

9. Polymer mixture according to Claim 7 or 8,
**characterized in that** component d) is a copolymer composed of methyl methacrylate, styrene and maleic anhydride.

10. Polymer mixture according to Claim 9,
**characterized in that** component d) is a copolymer composed of
from 50 to 90% by weight of methyl methacrylate,
from 10 to 20% by weight of styrene and
from 5 to 15% by weight of maleic anhydride.

11. Polymer mixture according to one or more of Claims 7 to 10, **characterized in that** component e) has a two- or three-shell structure.

12. Polymer mixture according to one or more of Claims 7 to 11, **characterized in that** component f) is a copolymer composed of methyl methacrylate, styrene and maleic anhydride.

13. Polymer mixture according to Claim 12,
**characterized in that** component f) is a copolymer composed of
from 50 to 90% by weight of methyl methacrylate,
from 10 to 20% by weight of styrene and
from 5 to 15% by weight of maleic anhydride.

14. Polymer mixture according to one or more of Claims 7 to 13, **characterized in that** component g) is a homopolymer or copolymer composed of at least 80% by weight of methyl methacrylate and, where appropriate, up to 20% by weight of other monomers copolymerizable with methyl methacrylate.

15. Polymer mixture according to Claim 14,
**characterized in that** component g) is a copolymer composed of from 95 to 99.5% by weight of methyl methacrylate and from 0.5 to 5% by weight of methyl acrylate, ethyl acrylate and/or butyl acrylate.

16. Polymer mixture according to one or more of Claims 1 to 15, **characterized in that** a lubricant is present as auxiliary.

17. Polymer mixture according to Claim 16,
**characterized in that** stearyl alcohol is present as mould-release agent.

18. Polymer mixture according to one or more of Claims 1 to 17, **characterized in that** it takes the form of a pelletized moulding composition.

19. Process for producing injection mouldings in a manner known per se, **characterized in that** use is made of a polymer mixture according to one or more of Claims 1 to 18 as starting material.

20. Injection moulding, capable of production in a process according to Claim 19.

21. Injection moulding according to Claim 20,
**characterized in that** it has a roughness value R_{z} to DIN 4768 of at least 0.7 µm, a gloss (R 60°) to DIN 67530 of at most 40 and a Vicat softening point VSP (ISO 306-B50) of at least 90°C.

22. Injection moulding according to Claim 20 or 21,
**characterized in that** it has one or more of the following properties
I. a tensile modulus (ISO 527) of at least 2600 MPa,
II. a Vicat softening point VSP (ISO 306-B50) of at least 108°C,
III. an impact strength (ISO 179-2D, flatwise) of at least 10 kJ/m², and
IV. a melt index MVR (ISO 1133, 230°C/3.8 kg) of at least 0.5 cm³/10 min.

23. Use of the injection mouldings according to one or more of Claims 20 to 23 as parts of household appliances, of communication devices, or of devices for hobbies or sports, or as bodywork parts or parts of bodywork parts in the construction of automobiles, of ships or of aircraft.

## Revendications

1. Mélanges de polymères, contenant
a) une matrice polymère qui est constituée par un (co)polymère de (méth)acrylate ou un mélange de (co)polymères de (méth)acrylate présentant une température de ramollissement Vicat VST (ISO 306-B50) d'au moins 104°C et/ou d'un (co)polymère de (méth)acrylimide,
b) un agent de modification de la résilience à base de poly(méth)acrylates réticulés, qui n'est pas lié par covalence à la matrice polymère a),
c) 1 à 15% en poids de particules en matériau synthétique constituées par des polymères réticulés à base de poly(méthacrylate de méthyle), de polystyrène et/ou de polysilicones, présentant une grosseur moyenne des particules dans la plage de 1 à 30 µm,
où a), b) et c) s'ajoutent à 100% en poids, où le mélange de polymères peut encore contenir des additifs, adjuvants et/ou charges usuels et une éprouvette moulée par injection à partir du mélange de polymères présente simultanément les propriétés suivantes :
une valeur de rugosité R_{z} selon la norme DIN 4768 d'au moins 0,7 µm, un degré de brillance (R 60°) selon la norme DIN 67530 d'au plus 40, ainsi qu'une température de ramollissement de Vicat VST (ISO 306-B50) d'au moins 90°C.

2. Mélange de polymères selon la revendication 1, **caractérisé en ce que** les composants se trouvent dans les rapports des quantités suivants
a) 25 à 75% en poids
b) 5 à 60% en poids
c) 1 à 15% en poids.

3. Mélange de polymères selon la revendication 1 ou 2, **caractérisé en ce que** l'agent de modification de la résilience b) présente une structure à deux ou trois coquilles.

4. Mélange de polymères selon l'une ou plusieurs des revendications 1 à 3, **caractérisé en ce que** la matrice polymère a) est constituée par un (co)polymère de (méth)acrylate de 96 à 100% en poids de méthacrylate de méthyle et de 0 à 4% en poids d'acrylate de méthyle, d'acrylate d'éthyle et/ou d'acrylate de butyle.

5. Mélange de polymères selon l'une ou plusieurs des revendications 1 à 3, **caractérisé en ce que** la matrice polymère a) est un copolymère de méthacrylate de méthyle, de styrène et d'anhydride de l'acide maléique.

6. Mélange de polymères selon la revendication 5, **caractérisé en ce que** la matrice polymère a) est un copolymère de
50 à 90% en poids de méthacrylate de méthyle,
10 à 20% en poids de styrène et
5 à 15% en poids d'anhydride de l'acide maléique.

7. Mélange de polymères selon l'une ou plusieurs des revendications 1 à 3, **caractérisé en ce qu'**on introduit les constituants a) et b) du mélange de polymères individuellement ou sous forme d'un compound qui contient les composants suivants,
d) un (co)polymère de (méth)acrylate de bas poids moléculaire,
**caractérisé par** une viscosité en solution dans du chloroforme à 25°C (ISO 1628 - partie 6) inférieure/égale à 55 ml/g,
e) un agent de modification de la résilience à base de poly(méth)acrylates réticulés,
f) un (co)polymère de (méth)acrylate de haut poids moléculaire,
**caractérisé par** une viscosité en solution dans du chloroforme à 25°C (ISO 1628 - partie 6) supérieure/égale à 65 ml/g et/ou
g) au autre (co)polymère de (méth)acrylate différent de d),
**caractérisé par** une viscosité en solution dans du chloroforme à 25°C (ISO 1628 - partie 6) de 50 à 55 ml/g,
où les composants d), e), f) et/ou g) peuvent chacun à chaque fois être considérés comme polymère individuel ou également comme mélanges de polymères,
où d), e), f) et/ou g) s'ajoutent à 100% en poids, où le mélange de polymères peut encore contenir des additifs, adjuvants et/ou charges usuels et
où une éprouvette réalisée à partir du mélange de polymères des composants d), e), f) et/ou g) présente simultanément les propriétés suivantes :
I. un module de traction (ISO 527) d'au moins 2600 MPa,
II. une température de ramollissement de Vicat VST (ISO 306-B50) d'au moins 109°C,
III. une résilience (ISO 179-2D, à plat) d'au moins 17 KJ/m², et
IV. un indice de fusion MVR (ISO 1133, 230°C/3,8 kg) d'au moins 1,5 cm³/10 min.

8. Mélange de polymères selon la revendication 7, **caractérisé en ce que** les composants se trouvent dans les rapports des quantités suivants et s'ajoutent à 100% en poids :
d) 25 à 75% en poids
e) 10 à 60% en poids
f) et/ou
g) 10 à 50% en poids.

9. Mélange de polymères selon la revendication 7 ou 8, **caractérisé en ce que** le composant d) est un copolymère de méthacrylate de méthyle, de styrène et d'anhydride de l'acide maléique.

10. Mélange de polymères selon la revendication 9, **caractérisé en ce que** le composant d) est un copolymère de
50 à 90% en poids de méthacrylate de méthyle,
10 à 20% en poids de styrène et
5 à 15% en poids d'anhydride de l'acide maléique.

11. Mélange de polymères selon l'une ou plusieurs des revendications 7 à 10, **caractérisé en ce que** le composant e) présente une structure à deux ou trois coquilles.

12. Mélange de polymères selon l'une ou plusieurs des revendications 7 à 11, **caractérisé en ce que** le composant f) est un copolymère de méthacrylate de méthyle, de styrène et d'anhydride de l'acide maléique.

13. Mélange de polymères selon la revendication 12, **caractérisé en ce que** le composant f) est un copolymère de
50 à 90% en poids de méthacrylate de méthyle,
10 à 20% en poids de styrène et
5 à 15% en poids d'anhydride de l'acide maléique.

14. Mélange de polymères selon l'une ou plusieurs des revendications 7 à 13, **caractérisé en ce que** le composant g) est un homopolymère ou un copolymère d'au moins 80% en poids de méthacrylate de méthyle et le cas échéant de jusqu'à 20% en poids d'autres monomères copolymérisables avec le méthacrylate de méthyle.

15. Mélange de polymères selon la revendication 14, **caractérisé en ce que** le composant g) est un copolymère de 95 à 99,5% en poids de méthacrylate de méthyle et de 0,5 à 5% en poids d'acrylate de méthyle, d'acrylate d'éthyle et/ou d'acrylate de butyle.

16. Mélange de polymères selon l'une ou plusieurs des revendications 1 à 15, **caractérisé en ce qu'**un lubrifiant est contenu come adjuvant.

17. Mélange de polymères selon la revendication 16, **caractérisé en ce que** de l'alcool stéarylique est contenu comme agent de démoulage.

18. Mélange de polymères selon l'une ou plusieurs des revendications 1 à 17, **caractérisé en ce qu'**il se trouve sous forme d'un granulat pour masse de moulage.

19. Procédé pour la fabrication de corps façonnés moulés par injection de manière connue en soi, **caractérisé en ce qu'**on utilise un mélange de polymères selon l'une ou plusieurs des revendications 1 à 18 comme substance de départ.

20. Corps façonné moulé par injection, pouvant être préparé par un procédé selon la revendication 19.

21. Corps façonné moulé par injection selon la revendication 20, **caractérisé en ce qu'**il présente une valeur de rugosité R_{z} selon la norme DIN 4768 d'au moins 0,7 µm, un degré de brillance (R 60°) selon la norme DIN 67530 d'au plus 40 et une température de ramollissement de Vicat VST (ISO 306-B50) d'au moins 90°C.

22. Corps façonné moulé par injection selon la revendication 20 ou 21, **caractérisé en ce qu'**il présente une ou plusieurs des propriétés suivantes
I. un module de traction (ISO 527) d'au moins 2600 MPa,
II. une température de ramollissement de Vicat VST (ISO 306-B50) d'au moins 108°C,
III. une résilience (ISO 179-2D, sur les bords) d'au moins 10 KJ/m², et
IV. un indice de fusion MVR (ISO 1133, 230°C/3,8 kg) d'au moins 0,5 cm³/10 min.

23. Utilisation des corps façonnés moulés par injection selon l'une ou plusieurs des revendications 20 à 22 comme pièces d'appareils domestiques, d'appareils de communication, d'appareils de loisir ou de sport, pièces de carrosserie ou parties de pièces de carrosserie dans la construction automobile, navale ou aéronautique.
